# EUROPÄISCHE PATENTSCHRIFT

(11) **EP 3 091 876 B1**
(45) Veröffentlichungstag und Bekanntmachung des Hinweises auf die Patenterteilung: **25.04.2018**
(21) Anmeldenummer: 15700969.7
(22) Anmeldetag: 08.01.2015
(51) Int. Cl.: A47C 20/04, A47C 1/036, A47C 7/38, A47C 7/40, A47C 7/50, A47C 1/034, A47C 1/037

(54) **MÖBELBESCHLAG, ANORDNUNG MIT ZWEI MÖBELBESCHLÄGEN SOWIE VERWENDUNG EINES MÖBELBESCHLAGS**
FURNITURE FITTING, ARRANGEMENT HAVING TWO FURNITURE FITTINGS, AND USE OF A FURNITURE FITTING
FERRURE DE MEUBLE, ENSEMBLE COMPRENANT DEUX FERRURES DE MEUBLE ET UTILISATION D'UNE FERRURE DE MEUBLE

(30) Priorität: 08.01.2014 DE 202014000212 U
(43) Veröffentlichungstag der Anmeldung: 16.11.2016
(73) Patentinhaber: Baumeister & Schack GmbH & Co. KG, 72336 Balingen-Ostdorf (DE)
(72) Erfinder: BAUMEISTER, Karlheinz, 72336 Balingen (DE)
(74) Vertreter: Witte, Weller & Partner Patentanwälte mbB
(86) Internationale Anmeldenummer: PCT/EP2015/050232
(87) Internationale Veröffentlichungsnummer: WO 2015/104319

(56) Entgegenhaltungen:
- EP-A1- 2 638 827
- AT-A1- 511 549
- AT-U1- 12 204

## Beschreibung

Die Erfindung betrifft das Gebiet der Möbelbeschläge. Insbesondere betrifft die Erfindung verstellbare Möbelbeschläge, die etwa zur Verstellung von Kopfteilen oder zur Verstellung von Fußteilen bei Möbelstücken, insbesondere bei Sitzmöbeln, verwendbar sind. Die Erfindung betrifft ferner eine Anordnung, die zwei derartige Möbelbeschläge umfasst. Schließlich betrifft die Erfindung auch vorteilhafte Verwendungen von Möbelbeschlägen.

Möbelbeschläge allgemeiner Art sind beispielsweise aus der DE 10 2011 109 668 A1, der DE 20 2006 010 395 U1, sowie der DE 20 2007 017 997 U1 bekannt.

Aus der AT 511 549 A1 ist ein Möbelbeschlag gemäß dem Oberbegriff des Anspruchs 1 bekannt.

Aus der EP 2 638 827 A1 ist ein Schwenkbeschlag bekannt, der zum Verstellen zweier Bauteile eines Polstermöbels gegeneinander dient, wobei der Schwenkbeschlag von einer gekrümmten Stellung in eine gestreckte Stellung verstellt werden kann, mit einem Schwenkhebel und einem Stützhebel, wobei der Stützhebel und der Schwenkhebel zum Vermeiden eines versehentlichen Verstellens des Schwenkbeschlags aus wenigstens einer Stellung über ein Rastgelenk und/oder ein Klemmgelenk miteinander verbunden und um eine Schwenkachse gegeneinander schwenkbar sind, und wobei der Stützhebel einen längs zum Stützhebel verschiebbar vorgesehenen Stützschlitten trägt.

Beispielhaft finden Möbelbeschläge Einsatz in Sitzmöbeln, die eine Rückenlehne und ein Kopfteil aufweisen, das verschwenkbar an der Rückenlehne befestigt ist. Demgemäß handelt es sich bei derartigen Sitzmöbeln um Sitzmöbel mit Kopfteilverstellung. Derartige Sitzmöbel sind grundsätzlich bekannt. Ferner sind Möbelbeschläge allgemeiner Art bekannt. Die Möbelbeschläge werden an den Sitzmöbeln montiert, um eine gesteuerte Verstellung einer Kopfauflage zur Erhöhung des Sitzkomforts zu ermöglichen. Die Verstellung kann üblicherweise manuell von Hand oder aber auch über einen Elektromotor erfolgen.

In ähnlicher Weise können die Möbelbeschläge auch für sogenannte Fußteilverstellungen genutzt werden, also bei Sitzmöbeln, die eine Sitzfläche und ein Fußteil bzw. eine Beinauflage aufweisen, die verschwenkbar an der Sitzfläche befestigt sind.

Möbelbeschläge werden vorzugsweise paarweise verwendet, da jedes Sitzmöbel eine bestimmte Breite aufweist. Somit können die Beschläge etwa an äußeren Enden (möglichst nahe an den äußersten Seiten) des Kopfteils aufgenommen sein. Derartige Möbelbeschläge werden dann üblicherweise mechanisch miteinander verbunden. Es ist auch vorstellbar, mehr als zwei Möbelbeschläge miteinander zu koppeln, wenn das Sitzmöbel eine große Breite aufweist.

Bekannte Möbelbeschläge sind konstruktiv aufwendig und im Hinblick auf den Bauraum nicht platzsparend aufgebaut. Im Falle bekannter Möbelbeschläge kann es etwa beim Ausklappen von verstellbaren Kopfteilen zu einer Faltenbildung bei den Polstern des Sitzmöbels kommen. Die Faltenbildung führt zu einer nachteiligen, unschönen Optik. Die Faltenbildung wird häufig als nicht hochwertig wahrgenommen.

Vor diesem Hintergrund liegt der Erfindung die Aufgabe zugrunde, einen Möbelbeschlag anzugeben, mit dem die vorstehend genannten Nachteile und Probleme vermindert oder gar gänzlich vermieden werden können. Ferner ist es die Aufgabe der Erfindung, eine Anordnung anzugeben, die zwei derartige Möbelbeschläge aufweist. Schließlich liegt die Aufgabe der Erfindung darin, vorteilhafte Verwendungen von Möbelbeschlägen anzugeben. Vorzugsweise weisen die Möbelbeschläge eine kompakte Bauform auf und können mit niedrigem Aufwand hergestellt werden, etwa im Wesentlichen auf Basis von Stanzbiegeteilen.

Die Aufgabe der Erfindung wird durch einen Möbelbeschlag gelöst, der Folgendes aufweist:
- einen Halteträger
- ein erstes Schubelement
- ein zweites Schubelement, das schwenkbar gegenüber dem ersten Schubelement ist, und
- ein drittes Schubelement, das längsverschiebbar zum zweiten Schubelement und schwenkbar gegenüber dem ersten Schubelement ist, wobei eine Längsverschiebung des ersten Schubelementes eine Schwenkbewegung des zweiten Schubelements relativ zum ersten Schubelement und eine daraus resultierende Vorschubbewegung des dritten Schubelements bewirkt,
wobei ein Schwenken des zweiten Schubelements um eine Lagerung am ersten Schubelement über einen Koppelmechanismus, insbesondere einen Hebelmechanismus, eine Vorschubbewegung des dritten Schubelements bewirkt
wobei zumindest am Halteträger oder am ersten Schubelement eine Längsnut als Führung für eine Längsverschiebung zwischen dem Halteträger und dem ersten Schubelement ausgebildet ist, und
wobei zumindest am zweiten Schubelement oder am dritten Schubelement ist eine Längsnut als Führung für eine Längsverschiebung zwischen dem zweiten Schubelement und dem dritten Schubelement ausgebildet ist.

Die Aufgabe der Erfindung wird auf diese Weise vollständig gelöst.

Erfindungsgemäß sind nämlich der Halteträger, das erste Schubelement, das zweite Schubelement und das dritte Schubelement derart miteinander gekoppelt, dass sich bei der Verstellung des Möbelbeschlags (etwa zur Kopfteilverstellung oder zur Fußteilverstellung) neben einer Schwenkbewegung zwischen den Paaren Halteträger/erstes Schubelement sowie zweites Schubelement/drittes Schubelement auch eine Längsverschiebung zwischen dem ersten Schubelement und dem Halteträger sowie zwischen dem zweiten Schubelement und dem dritten Schubelement ergibt. Auf diese Weise kann der Möbelbeschlag nicht nur verschwenkt werden, sondern fährt während der Schwenkbewegung auch aus bzw. verlängert sich.

Auf diese Weise kann etwa das Problem der Faltenbildung bei bezogenen Polstern von Sitzmöbeln gelöst werden. Mit anderen Worten ist das dritte Schubelement längsverschiebbar am zweiten Schubelement aufgenommen. Das zweite Schubelement ist wiederum - über das erste Schubelement - längs-schwenkverschiebbar am Halteträger angebracht. Der Längenausgleich zwischen den Schubelementen sorgt dafür, dass in einer vollständig eingeklappten Stellung und auch bis hin zu einer vollständig ausgeklappten Stellung die Polsterung des Sitzmöbels straff gespannt wird. Der Möbelbeschlag ist stabil, belastbar und komfortabel und erlaubt einen vorteilhaften Längenausgleich bzw. eine Längenanpassung.

Mit anderen Worten betrifft die vorliegende Offenbarung einen mechanischen Möbelbeschlag, welcher elektronisch bzw. elektromotorisch unterstützt werden kann. Der Möbelbeschlag umfasst im Wesentlichen einen Halteträger, ein erstes Schubelement, ein zweites Schubelement und ein drittes Schubelement. Das erste Schubelement kann eine Spindel aufweisen, die mit einem kraftgetriebenen Antrieb, etwa mit einem Elektromotor, gekoppelt ist. Auf diese Weise kann ein Bewegungshub des ersten Schubelements relativ zum Halteträger bewirkt werden. Der Halteträger und das erste Schubelement sind miteinander drehsicher gekoppelt. Die Hubbewegung bewirkt eine Verschiebung des ersten Schubelements relativ zum Halteträger. Hieraus resultiert eine Schwenk-Hubbewegung des zweiten Schubelements, wodurch wiederum eine zusätzliche Hubbewegung auf das dritte Schubelement ausgeübt werden kann. Das zweite Schubelement und das dritte Schubelement sind zueinander längsverschieblich verdrehsicher miteinander gekoppelt.

Ein weiterer Vorteil der vorgenannten Ausgestaltung des Möbelbeschlags besteht darin, dass eine manuelle Verstellung auch ohne Verwendung eines Motors ermöglicht ist. Dies ist üblicherweise bei bekannten motorbetriebenen Möbelbeschlägen nicht oder nur schwer möglich. Dies geht darauf zurück, dass die Bewegung lediglich motorseitig erzeugbar und in den Möbelbeschlag zu dessen Verstellung einleitbar ist. Die Seite bzw. das Ende des Möbelbeschlags, an dem der Motor angreift, wird Geberseite genannt. Bei einem Möbelbeschlag gemäß dem oben genannten Aspekt ist es vorstellbar, zur manuellen Verstellung sowohl auf das erste Schubelement (also im obigen Sinne "geberseitig") als auch - alternativ dazu - am dritten Schubelement (gemäß der obigen Nomenklatur "nehmerseitig") anzugreifen, um den Möbelbeschlag manuell zu verstellen.

Die erfindungsgemäße Gestaltung des Möbelbeschlags erlaubt eine sehr kompakte Bauform. Ferner können erfindungsgemäße Möbelbeschläge unsichtbar in Polsterungen der Möbelstücke eingebaut werden. Dies ist optisch von hohem Vorteil. Eine solche Gestaltung wird allgemein als hochwertig empfunden bzw. wahrgenommen. Ferner erhöht die integrale Gestaltung die Bedienersicherheit. Auf diese Weise besteht nämlich keine hohe Gefahr von Scherstellen oder Klemmstellen, an denen sich etwa ein Benutzer des Möbelstücks verletzen könnte.

Zwei Möbelbeschläge gemäß den oben genannten Aspekten können miteinander fest verbunden werden. Auf diese Weise kann auf einen weiteren Antrieb beim zweiten Möbelbeschlag verzichtet werden, wenn der erste Möbelbeschlag bereits über einen Antrieb verfügt. Die feste Verbindung kann beispielsweise über ein Rechteckrohr erzeugt werden, das mit einer Aussparung im dritten Schubelement beider Möbelbeschläge fest verbunden wird.

Ein Schwenken des zweiten Schubelements um eine Lagerung am ersten Schubelement über einen Koppelmechanismus, insbesondere einen Hebelmechanismus, bewirkt eine Vorschubbewegung des dritten Schubelements. Dies kann etwa durch ein geeignetes Koppelgetriebe bewirkt werden, welches eine Antriebsbewegung in eine gewünschte Abtriebsbewegung überführt, wobei etwa eine (Längs-)Schubbewegung in eine Schwenkbewegung überführt werden kann.

Gemäß einer weiteren Ausgestaltung sind der Halteträger und das erste Schubelement einer ersten Schubgelenkeinheit zugeordnet, wobei das erste Schubelement längsverschieblich am Halteträger aufgenommen ist. Ferner sind gemäß einer weiteren Ausgestaltung das zweite Schubelement und das dritte Schubelement einer zweiten Schubgelenkeinheit zugeordnet, wobei das dritte Schubelement längsverschieblich am zweiten Schubelement aufgenommen ist.

Insgesamt betrachtet kann somit ein Möbelbeschlag bereitgestellt werden, der eine erste Schubgelenkeinheit und zumindest eine weitere Schubgelenkeinheit aufweist, wobei jede Schubgelenkeinheit zwei relativ zueinander längsverschiebbare Schubelemente aufweist. Bei der ersten Schubgelenkeinheit handelt es sich um den Halteträger und das erste Schubelement. Bei der zweiten Schubgelenkeinheit handelt es sich um das zweite Schubelement und das dritte Schubelement. Die erste Schubgelenkeinheit und die zweite Schubgelenkeinheit sind über den Koppelmechanismus miteinander verschwenkbar gekoppelt. Der Koppelmechanismus erlaubt eine zwangsgesteuerte Bewegung, die vorzugsweise genau einen Bewegungsfreiheitsgrad (F = 1) für den Koppelmechanismus aufweist. Die zwangsgesteuerte Bewegung kann etwa umfassen, dass ein Antrieb an lediglich einem der Elemente die gewünschte Bewegung sämtlicher weiterer Elemente der Schubgelenkeinheiten bewirkt. Ein Antrieb kann etwa am ersten Schubelement erfolgen, wenn dieses manuell oder motorisch gegenüber dem Halteträger in einer Längsrichtung verschoben wird. Diese Längsbewegung kann die Relativverschwenkung der zweiten Schubeinheit relativ zur ersten Schubeinheit und die relative Längsverschiebung zwischen dem zweiten Schubelement und dem dritten Schubelement bewirken.

Gemäß einer weiteren Ausgestaltung des Möbelbeschlags bilden der Halteträger, das erste Schubelement, das zweite Schubelement und das dritte Schubelement Komponenten eines ebenen Koppelgetriebes. Vorzugsweise sind der Halteträger, das erste Schubelement, das zweite Schubelement und das dritte Schubelement parallel zueinander ausgerichtet. Auf diese Weise kann sich eine äußerst kompakte flache Bauform ergeben.

Im Vergleich zu bekannten Möbelbeschlägen kann insbesondere auf räumliche Koppelgetriebe verzichtet werden. Räumliche Koppelgetriebe weisen verschiedene Nachteile auf. Hierzu gehören unter anderem ein hoher Bauraumbedarf sowie ein erhöhter Aufwand bei der Herstellung und Montage.

Zumindest am Halteträger oder am ersten Schubelement ist eine Längsnut als Führung für eine Längsverschiebung zwischen dem Halteträger und dem ersten Schubelement ausgebildet. Zumindest am zweiten Schubelement oder am dritten Schubelement ist eine Längsnut als Führung für eine Längsverschiebung zwischen dem zweiten Schubelement und dem dritten Schubelement ausgebildet. Die Längsnut für die Längsverschiebung kann insbesondere als Langloch gestaltet sein. Gemäß einer Weiterbildung der vorgenannten Ausgestaltungen sind der zumindest einen Längsnut zwei Führungselemente zugeordnet, die in die Längsnut eingreifen und in dieser verschieblich aufgenommen sind. Die Führungselemente können insbesondere als voneinander beabstandete Führungsbolzen gestaltet sein.

Mit anderen Worten kann jede Schubgelenkeinheit eine Paarung einer Längsnut sowie einer Mehrzahl von Führungselementen aufweisen, die in der Längsnut längsverschieblich aufgenommen sind. Beispielhaft ist bei der ersten Schubgelenkeinheit die Führungsnut in das erste Schubelement eingebracht. Demgemäß sind die Führungselemente am Halteträger aufgenommen. Beispielhaft sind bei der zweiten Schubgelenkeinheit die Führungselemente am dritten Schubelement aufgenommen. Demgemäß ist die Längsnut in das zweite Schubelement eingebracht. Es versteht sich, dass die Zuordnung der Führungselemente und der Längsnut zu den Komponenten der Schubgelenkeinheiten auch umgekehrt erfolgen kann.

Gemäß einer weiteren Ausgestaltung ist das zweite Schubelement schwenkbar am ersten Schubelement gelagert, wobei das zweite Schubelement über ein erstes Koppelstück, insbesondere über einen ersten Hebel, mit dem Halteträger gekoppelt ist. Das erste Koppelstück kann insbesondere als Koppelhebel bezeichnet werden.

Insgesamt können der Halteträger, das erste Schubelement, das zweite Schubelement und das erste Koppelstück einen ersten Viergelenkmechanismus bilden, der drei Drehgelenke sowie ein Schubgelenk aufweist. Der Halteträger und das erste Schubelement sind über ein Schubgelenk miteinander gekoppelt. Das zweite Schubelement und das erste Schubelement sind über ein Drehgelenk miteinander gekoppelt. Das erste Koppelstück ist über jeweils ein Drehgelenk mit dem Halteträger und dem zweiten Schubelement gekoppelt. Vorzugsweise weist der Viergelenkmechanismus genau einen Freiheitsgrad (F = 1) auf.

Bei dieser Gestaltung ist es weiter bevorzugt, wenn das erste Koppelstück bei einer Längsverschiebung zwischen dem Halteträger und dem ersten Schubelement eine Schwenkbewegung des zweiten Schubelements relativ zum ersten Schubelement bewirkt.

Gemäß einer weiteren Ausgestaltung des Möbelbeschlags ist das dritte Schubelement über ein zweites Koppelstück, insbesondere über einen zweiten Hebel, mit dem ersten Schubelement gekoppelt. Das zweite Koppelstück kann auch als zweiter Koppelhebel bezeichnet werden. Mit anderen Worten kann auf diese Weise durch das erste Schubelement, das zweite Schubelement, das dritte Schubelement und das zweite Koppelstück ein weiterer Viergelenkmechanismus ausgebildet sein. Der zweite Viergelenkmechanismus kann ebenso als Viergelenkmechanismus mit einem Schubgelenk bezeichnet werden. Das Schubgelenk ist zwischen dem zweiten Schubelement und dem dritten Schubelement ausgebildet. Das zweite Schubelement ist über ein Drehgelenk verschwenkbar am ersten Schubelement aufgenommen. Das zweite Koppelstück ist über jeweils ein Drehgelenk mit dem ersten Schubelement und dem dritten Schubelement gekoppelt.

Gemäß einer Weiterbildung dieser Gestaltung bewirkt das zweite Koppelstück bei einer Relativverschwenkung zwischen dem ersten Schubelement und dem zweiten Schubelement eine Längsverschiebung zwischen dem zweiten Schubelement und dem dritten Schubelement.

Insgesamt kann somit ein Koppelmechanismus bereitgestellt werden, der zwei Viergelenkmechanismen miteinander in vorteilhafter Weise kombiniert. Beide Viergelenkmechanismen können als Viergelenke mit drei Drehgelenken und einem Schubgelenk ausgebildet sein. Beide Viergelenkmechanismen weisen gemäß einer bevorzugten Ausgestaltung ein gemeinsames Drehgelenk auf. Mit anderen Worten sind beide Viergelenkmechanismen parallel zueinander orientiert.

Gemäß einer weiteren Ausgestaltung sind das erste Koppelstück und das zweite Koppelstück an voneinander abgewandten Seiten des ersten Schubelements angeordnet, wobei das erste Schubelement zwischen dem ersten Koppelstück und dem zweiten Koppelstück angeordnet ist. Vorzugsweise sind auch das zweite Schubelement und das dritte Schubelement zwischen dem ersten Koppelstück und dem zweiten Koppelstück angeordnet. Auf diese Weise kann eine flache Gestaltung realisiert werden. Der Bauraumbedarf des Möbelbeschlags ist sehr gering.

Gemäß einer weiteren Ausgestaltung sind das erste Schubelement und das dritte Schubelement in einer gemeinsamen Ebene angeordnet, die zu einer Ebene versetzt ist, in der das zweite Schubelement angeordnet ist. Mit anderen Worten können das erste Schubelement, das zweite Schubelement und das dritte Schubelement zueinander parallel orientiert sein, wobei das erste Schubelement und das dritte Schubelement miteinander fluchten, also sich im Wesentlichen in derselben Ebene erstrecken. Das zweite Schubelement ist hingegen in einer hierzu parallelen Versatzebene angeordnet und kann das erste Schubelement und das dritte Schubelement überlappen, um mit beiden gekoppelt zu werden, insbesondere über ein Drehgelenk und ein Schubgelenk.

Gemäß einer weiteren Ausgestaltung weist der Möbelbeschlag ferner ein viertes Schubelement und ein fünftes Schubelement auf, wobei das vierte Schubelement und das fünfte Schubelement einer dritten Schubgelenkeinheit zugeordnet sind, und wobei das fünfte Schubelement längsverschieblich am vierten Schubelement aufgenommen ist.

Mit anderen Worten können etwa die erste Schubgelenkeinheit und die zweite Schubgelenkeinheit eine erste und eine zweite Stufe des Möbelbeschlags ausbilden. Die dritte Schubgelenkeinheit kann eine weitere, dritte Stufe des Möbelbeschlags ausbilden. Insgesamt können die erste Schubgelenkeinheit, die zweite Schubgelenkeinheit und die dritte Schubgelenkeinheit eine kinematische Kette ausbilden, bei der die zweite Schubgelenkeinheit zwischen der ersten Schubgelenkeinheit und der dritten Schubgelenkeinheit angeordnet ist. Vorzugsweise erfolgt die Ausgestaltung der dritten Schubgelenkeinheit sowie die Ankopplung der dritten Schubgelenkeinheit an die zweite Schubgelenkeinheit analog der Gestaltung der zweiten Schubgelenkeinheit sowie der Ankopplung der zweiten Schubgelenkeinheit an die erste Schubgelenkeinheit. Auf diese Weise kann ein Möbelbeschlag geschaffen werden, der insgesamt zwischen der ersten Schubgelenkeinheit und der dritten Schubgelenkeinheit einen noch größeren Schwenkwinkel und einen noch größeren Ausfahrhub realisiert.

Gemäß einer Weiterbildung dieser Ausgestaltung ist das vierte Schubelement schwenkbar am dritten Schubelement gelagert, wobei das vierte Schubelement über ein drittes Koppelstück, insbesondere über einen dritten Hebel, mit dem zweiten Schubelement gekoppelt ist, und wobei das fünfte Schubelement über ein viertes Koppelstück, insbesondere über einen vierten Hebel, mit dem dritten Schubelement gekoppelt ist. Die Koppelstücke können auch als Koppelhebel bezeichnet werden.

Mit anderen Worten kann zwischen der zweiten Schubgelenkeinheit und der Schubgelenkeinheit ein zweiter Koppelmechanismus bereitgestellt werden, der dem ersten Koppelmechanismus, der zwischen der ersten Schubgelenkeinheit und der zweiten Schubgelenkeinheit ausgebildet ist, zumindest ähnlich gestaltet ist.

Demgemäß kann sich eine vorteilhafte Weiterbildung des Möbelbeschlags ergeben, wobei das dritte Koppelstück bei einer Längsverschiebung zwischen dem dritten Schubelement und dem zweiten Schubelement eine Schwenkbewegung des vierten Schubelements relativ zum dritten Schubelement bewirkt, und wobei das vierte Koppelstück bei einer Relativverschwenkung zwischen dem dritten Schubelement und dem vierten Schubelement eine Längsverschiebung zwischen dem vierten Schubelement und dem fünften Schubelement bewirkt.

Demgemäß kann auch der zweite Koppelmechanismus zwei Viergelenkmechanismen umfassen. Vorzugsweise ist jeder der beiden Viergelenkmechanismen (auch: dritter Viergelenkmechanismus und vierter Viergelenkmechanismus) als Viergelenkmechanismus mit drei Drehgelenken und einem Schubgelenk ausgebildet.

Grundsätzlich kann der Möbelbeschlag zwischen einer eingefahrenen und einer ausgefahrenen Stellung verstellt oder verfahren werden. Während der Verstellbewegung erfolgt zumindest bei unmittelbar miteinander gekoppelten Schubgelenkeinheiten auch eine Relativverschwenkung. Die Gesamtbewegung des Möbelbeschlags kann somit als kombinierte Bewegung aus Relativverschiebungen und Relativverschwenkungen bezeichnet werden.

Gemäß einer weiteren Ausgestaltung des Möbelbeschlags sind zumindest einige der Schubelemente, vorzugsweise sämtliche Schubelemente, als im Wesentlichen flache Blechteile ausgestaltet. Es ist weiter bevorzugt, wenn zumindest einige der Schubelemente als ebene Stanzteile aus Blechmaterial ausgeführt sind.

Dies kann einerseits zur weiteren Bauraumverringerung beitragen. Ferner kann der Fertigungsaufwand zur Herstellung des Möbelbeschlags weiter verringert werden. Es versteht sich, dass zumindest kleinere Gestaltelemente auch als von der flachen Gestaltung abweichende Elemente ausgeführt sein können. Hierbei kann es sich grundsätzlich etwa um Versteifungssicken oder Ähnliches handeln. Ferner sind jedoch auch Ausklinkungen, Laschen, Nasen oder ähnliche Teile denkbar, die über die flache Gestaltung hervorstehen.

Idealerweise sind zumindest einige der Schubelemente nahezu identisch oder vollständig identisch gestaltet. Dies kann die Fertigung weiter rationalisieren. Vorstellbar wäre beispielhaft auch, etwa ein bestimmtes Lochbild für die Drehgelenke und ähnliche Anbauteile an den Schubelementen auszubilden. Je nach tatsächlicher Verwendung bzw. dem tatsächlichen Einsatzzweck ist es dann vorstellbar, lediglich einige der Löcher, Aussparungen oder Bohrungen zu nutzen.

Gemäß einer weiteren Ausgestaltung weist der Halteträger ein erstes Trägerteil und ein zweites Trägerteil auf, die aus Blechmaterial geformt und vorzugsweise im Wesentlichen spiegelsymmetrisch gestaltet sind, wobei das erste Trägerteil und das zweite Trägerteil zwischen sich einen Führungsspalt für das erste Schubelement definieren. Gemäß einer weiteren Ausgestaltung weist zumindest das erste Trägerteil oder das zweite Trägerteil des Halteträgers eine Abkantung auf, die als Befestigungslasche zur Befestigung an einem Möbelstück ausgebildet ist. Die Abkantung kann beispielsweise eine 90°-Biegung umfassen.

Gemäß einer weiteren Ausgestaltung des Möbelbeschlags ist das erste Schubelement mit einer Gewindespindel gekoppelt, die in einem Lagerstück geführt ist, das am Halteträger aufgenommen ist. Beispielhaft weist das Lagerstück ein Innengewinde auf, das an ein Außengewinde der Gewindespindel angepasst ist. Entweder das Lagerstück oder die Gewindespindel können rotatorisch angetrieben werden, um eine Relativbewegung zwischen der Gewindespindel und dem Lagerstück zu bewirken. Auf diese Weise kann eine translatorische Schubbewegung oder Hubbewegung des ersten Schubelements relativ zum Halteträger bewirkt werden. Der Antrieb kann manuell oder motorisch erfolgen. Gemäß einer Ausführungsform ist das Lagerstück als Spindelmutter gestaltet.

Gemäß einer Ausgestaltung weist der Möbelbeschlag demgemäß ferner einen elektromotorischen Antrieb auf. Alternativ oder zusätzlich ist es auch vorstellbar, den Möbelbeschlag manuell (von Hand) zu verstellen. Ein manueller Antrieb kann grundsätzlich als Hauptantrieb des Möbelbeschlags ausgebildet sein. Ferner ist es jedoch auch vorstellbar, den manuellen Antrieb als Notantrieb vorzusehen. Ein manueller Notantrieb kann etwa genutzt werden, wenn der elektromotorische Antrieb nicht mit Energie versorgt werden kann oder wenn beim elektromotorischen Antrieb ein Defekt vorliegt. Vorzugsweise ist der elektromotorische Antrieb vom ersten Schubelement entkoppelbar, um einen manuellen Antrieb zu erlauben. Alternativ ist es auch vorstellbar, dass im Falle einer manuellen Verstellung des Möbelbeschlags gewissermaßen der elektromotorische Antrieb mitbewegt wird, wenn das erste Schubelement aufgrund einer manuellen Einwirkung auf den Möbelbeschlag relativ zum Halteträger verfahren wird.

Grundsätzlich ist es von Vorteil, wenn der elektromotorische Antrieb ein Haltemoment aufweist, das hinreichend groß genug ist, um eine Selbstverstellung des Möbelbeschlags zu verhindern. Alternativ oder zusätzlich sind Ausgestaltungen denkbar, bei denen die Kopplung des elektromotorischen Antriebs oder des manuellen Antriebs mit dem ersten Schubelement über eine Kraftübertragungseinrichtung (etwa ein Getriebe) erfolgt, das selbsthemmend ist. Ein selbsthemmendes Getriebe kann nur über eine definierte Antriebsseite angetrieben werden, um am Abtrieb eine definierte Bewegung bereitzustellen. Wenn ein solches selbsthemmendes Getriebe am Abtrieb angetrieben wird, erfolgt am Antrieb keine Bewegung.

Gleichwohl sind auch Ausgestaltungen denkbar, bei denen bewusst auf die Selbsthemmung verzichtet wird, um etwa eine manuelle Verstellung zu ermöglichen, bei der bewusst am "Abtrieb", etwa an der zweiten Schubgelenkeinheit oder der dritten Schubgelenkeinheit angegriffen wird. Gemäß einer solchen Ausgestaltung ist es weiter bevorzugt, wenn ein Sperrelement vorgesehen ist, das derart auf den Möbelbeschlag einwirken kann, dass eine Relativbewegung zwischen dem Halteträger und den Schubelementen wirksam unterbunden ist.

Die Anordnung betreffend wird die Aufgabe der Erfindung durch eine Anordnung mit einem Möbelbeschlag gemäß zumindest einem der vorstehend beschriebenen Aspekte gelöst, wobei der Möbelbeschlag als erster Möbelbeschlag ausgeführt und mit einem zweiten Möbelbeschlag derart zwangsgekoppelt verbunden ist, dass der zweite Möbelbeschlag gemeinsam mit dem ersten Möbelbeschlag bewegt wird.

Auf diese Weise wird die Aufgabe der Erfindung vollständig gelöst.

Der erste Möbelbeschlag kann auch als primärer Möbelbeschlag oder als Master bezeichnet werden. Der zweite Möbelbeschlag kann auch als sekundärer Möbelbeschlag oder als Slave bezeichnet werden. Es versteht sich, dass auch mehr als zwei Möbelbeschläge miteinander koppelbar sind, etwa bei übermäßig breiten Sitzmöbeln.

Gemäß einer weiteren Ausgestaltung der Anordnung sind der erste Möbelbeschlag und der zweite Möbelbeschlag über ein Verbindungsstück, insbesondere über ein Befestigungsrohr, miteinander gekoppelt, das insbesondere in Aussparungen der dritten Schubelemente des ersten Möbelbeschlags und des zweiten Möbelbeschlags eingreift.

Sofern die Möbelbeschläge als dreistufige Möbelbeschläge ausgeführt sind und demgemäß auch eine dritte Schubgelenkeinheit aufweisen, kann es sich anbieten, das Verbindungsstück an die fünften Schubelemente der beiden Möbelbeschläge anzukoppeln. Es versteht sich, dass auch eine Mehrzahl paralleler Verbindungsstücke vorstellbar ist, die jeweils gleichartige Schubelemente oder den Halteträger der beiden Möbelbeschläge miteinander verbinden.

Gemäß einer Weiterbildung der vorstehend beschriebenen Ausgestaltung der Anordnung ist den Aussparungen der dritten Schubelemente jeweils eine Lasche zugeordnet, die zur Fixierung des Verbindungsstücks ausgebildet ist. Sofern sich die Aussparungen an anderen Schubelementen befinden, kann auch dort jeweils eine entsprechende Lasche angeordnet sein. Die Lasche kann etwa als umgebogene Ausklinkung des Flachmaterials des Schubelements gestaltet sein. Vorzugsweise ist die Lasche ein integraler Bestandteil des dritten Schubelements. Es versteht sich, dass die Lasche eine Haupterstreckungsrichtung aufweist, die von der im Wesentlichen flachen Erstreckung des Schubelements abweicht.

Möbelbeschläge, die gemäß den hier beschriebenen Aspekten gestaltet sind, können vorteilhaft als Möbelbeschläge zur Kopfteilverstellung bei einem Sitzmöbel verwendet werden. Eine weitere vorteilhafte Verwendung eines solchen Möbelbeschlags ist die Verwendung als Möbelbeschlag zur Fußteilverstellung bei einem Sitzmöbel. Insbesondere die zweistufige Ausgestaltung des Möbelbeschlags mit der ersten Schubgelenkeinheit und der zweiten Schubgelenkeinheit eignen sich zur Kopfteilverstellung. Insbesondere die dreistufige Ausgestaltung des Möbelbeschlags mit einer ersten Schubgelenkeinheit, einer zweiten Schubgelenkeinheit und einer dritten Schubgelenkeinheit eignet sich für die Fußteilverstellung bei Sitzmöbeln.

Andere vorteilhafte Verwendungen des Möbelbeschlags sind ohne Weiteres denkbar. Insbesondere kann der Möbelbeschlag als Träger für ein klappbares Arbeitsutensil bei einem Arbeitsmöbel ausgestaltet sein. Hierbei kann es sich etwa um eine Arbeitsplatte handeln. Insbesondere kann der Möbelbeschlag jedoch auch als Träger für ein ausklappbares Anzeigegerät oder Eingabegerät genutzt werden. Allgemein kann es sich bei dem Arbeitsutensil etwa um eine Arbeitsplatte, einen Klapptisch oder Ähnliches handeln. Vorstellbar ist jedoch auch die Verwendung des Möbelbeschlags als Träger für eine Monitor oder ein ähnliches Anzeigegerät. Das Arbeitsutensil kann beispielsweise zwischen einer ersten, versenkten Stellung und einer zweiten, ausgefahreren Stellung verfahren werden.

Es versteht sich, dass die vorstehend genannten und die nachstehend noch zu erläuternden Merkmale der Erfindung nicht nur in der jeweils angegebenen Kombination, sondern auch in anderen Kombinationen und in Alleinstellung verwendbar sind, ohne den Rahmen der vorliegenden Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine perspektivische schematische Ansicht einer Ausgestaltung eines Möbelbeschlags in einer ersten, eingeklappten Stellung;
- Fig. 2: eine perspektivische schematische Ansicht des Möbelbeschlags gemäß Fig. 1 in einer Zwischenstellung;
- Fig. 3: eine weitere perspektivische Ansicht des Möbelbeschlags gemäß Fig. 1 in einer zweiten, ausgeklappten Stellung;
- Fig. 4: noch eine weitere perspektivische schematische Ansicht des Möbelbeschlags gemäß Fig. 1 in einer Stellung gemäß Fig. 2 mit einer von den Figuren 1, 2 und 3 abweichenden Ansichtsorientierung;
- Fig. 5: eine Vorderansicht des Möbelbeschlags gem. Fig. 1 in der Orientierung gemäß Fig. 3;
- Fig. 6: eine stark vereinfachte schematische seitliche Teilansicht eines Sitzmöbels mit einem verstellbaren Kopfteil, zu dessen Verstellung ein Möbelbeschlag vorgesehen ist, der dem Möbelbeschlag gemäß Fig. 1 ähnlich gestaltet ist, wobei das Kopfteil in einer eingeklappten Stellung gezeigt ist;
- Fig. 7: eine weitere stark vereinfachte schematische seitliche Teilansicht des Sitzmöbels gemäß Fig. 6, wobei das Kopfteil in einer Zwischenstellung gezeigt ist;
- Fig. 8: noch eine weitere stark vereinfachte schematische seitliche Teilansicht des Sitzmöbels gemäß den Figuren 6 und 7, wobei das Kopfteil in einer vollständig ausgeklappten Stellung gezeigt ist;
- Fig. 9: eine perspektivische Ansicht einer Anordnung mit einem primären Möbelbeschlag und einem sekundären Möbelbeschlag, die über ein Verbindungsstück miteinander zwangsgekoppelt sind;
- Fig. 10: eine schematische seitliche Ansicht eines Möbelbeschlags, der gegenüber dem in den Figuren 1 bis 4 gezeigten Möbelbeschlag abgewandelt ist, in einer ersten, eingeklappten Stellung;
- Fig. 11: eine weitere schematische Seitenansicht des Möbelbeschlags gemäß Fig. 10 in einer zweiten, ausgeklappten Stellung;
- Fig. 12: ein stark vereinfachte schematische Seitenansicht eines Möbelstücks, das eine verstellbare Fußauflage aufweist; und
- Fig. 13: eine weitere stark vereinfachte schematische Seitenansicht des Möbelstücks gemäß Fig. 12, wobei die Fußauflage ausgefahren ist.

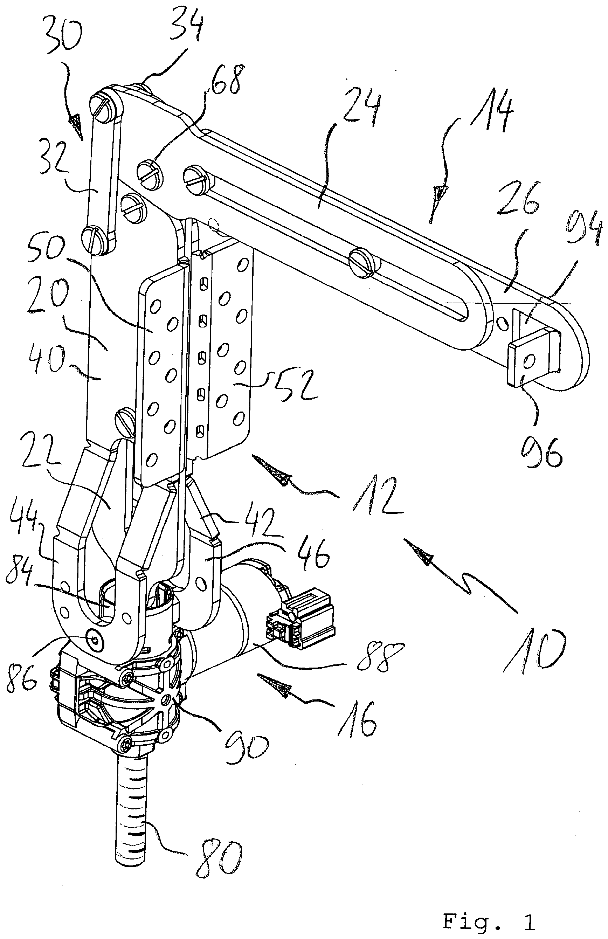

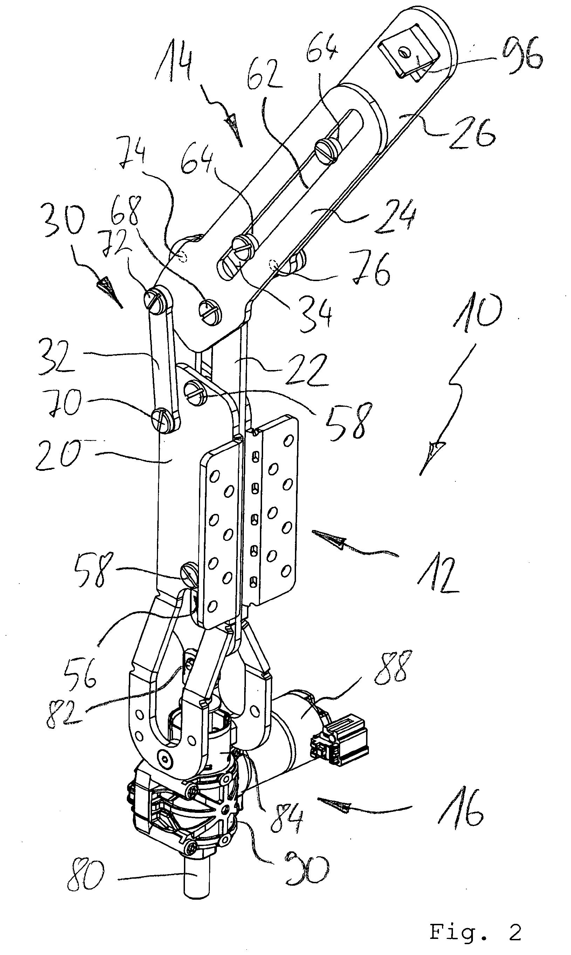

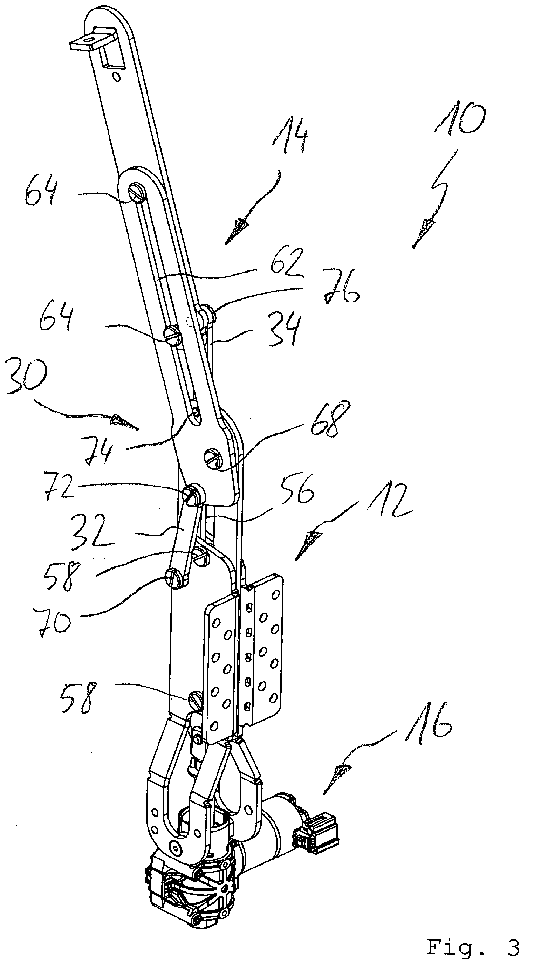

Anhand der Figuren 1 bis 5 wird eine vorteilhafte Ausgestaltung eines Möbelbeschlags veranschaulicht, wobei der Möbelbeschlag insgesamt mit 10 bezeichnet ist. Der Möbelbeschlag 10 ist als verstellbarer Möbelbeschlag 10 ausgeführt. Der Möbelbeschlag 10 ist insbesondere zwischen einer ersten Stellung und einer zweiten Stellung verstellbar. Die erste Stellung ist der Fig. 1 entnehmbar. Die zweite Stellung ist etwa der Fig. 3 entnehmbar. Die erste Stellung und die zweite Stellung können jeweils Extremlagen darstellen. Bei der ersten Stellung gemäß Fig. 1 kann es sich etwa um eine eingefahrene oder eingeklappte Stellung handeln. Bei der zweiten Stellung gemäß Fig. 3 kann es sich etwa um eine ausgefahrene oder ausgeklappte Stellung handeln. Fig. 2 veranschaulicht eine Zwischenstellung des Möbelbeschlags 10 zwischen der ersten Stellung gemäß Fig. 1 und der zweiten Stellung gemäß Fig. 3.

Es versteht sich, dass der Möbelbeschlag 10 weitere Zwischenstellungen einnehmen kann. Somit eignet sich der Möbelbeschlag 10 einerseits für die stufenlose Verstellung von Bauteilen von Möbelstücken, insbesondere von Sitzmöbeln. Es ist jedoch auch vorstellbar, den Möbelbeschlag 10 für Anbauteile oder Komponenten von Möbelstücken, insbesondere von Sitzmöbeln, zu verwenden, die lediglich zwei diskrete Stellungen aufweisen, etwa eine eingefahrene und eine ausgefahrene Stellung. Es ist auch vorstellbar, den Möbelbeschlag 10 derart zu gestalten, dass eine Mehrzahl (jedoch keine unendlich große Mehrzahl) von Zwischenstellungen erlaubt ist.

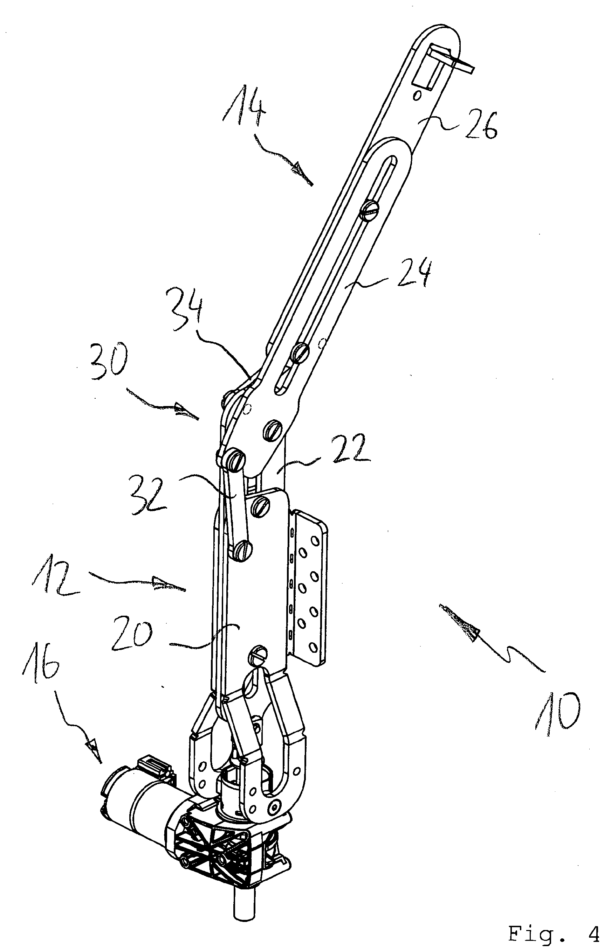

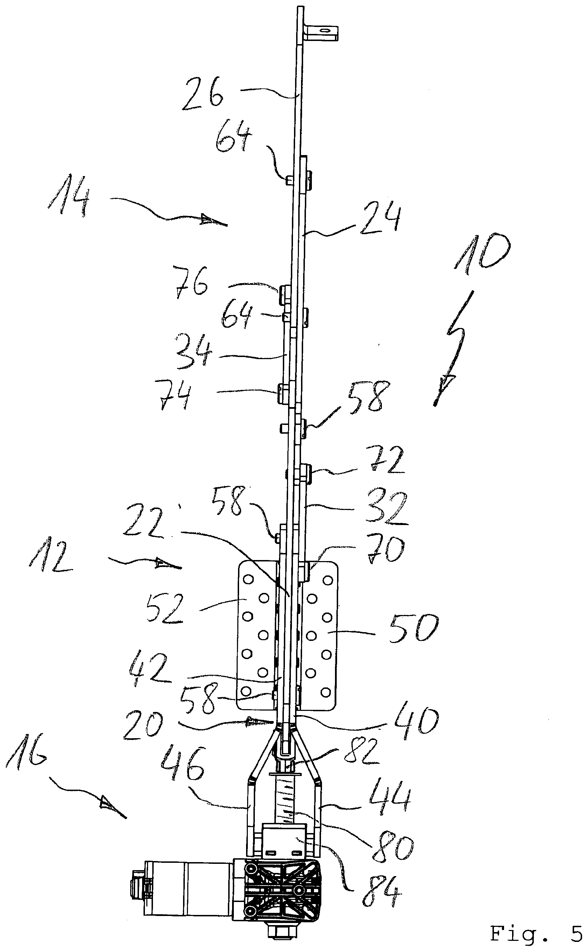

Die Stellung des Möbelbeschlags 10, die in Fig. 4 gezeigt wird, entspricht der Stellung in Fig. 2. Fig. 2 und Fig. 4 unterscheiden sich voneinander primär durch die geänderte Ansichtsorientierung. Die Vorderansicht des Möbelbeschlags 10, die in Fig. 5 gezeigt ist, zeigt den Möbelbeschlag 10 analog zur Gestaltung in Fig. 3 in der zweiten, ausgefahrenen oder ausgeklappten, Stellung. Die Figuren 3 und 5 unterscheiden sich primär in ihrer Ansichtsorientierung.

Der Möbelbeschlag 10 weist eine erste Schubgelenkeinheit 12 und eine zweite Schubgelenkeinheit 14 auf, die in geeigneter Weise miteinander gekoppelt sind. Auf diese Weise kann eine Schubgelenkkette realisiert werden, die zumindest zwei Stufen umfasst. Somit kann die erste Schubgelenkeinheit 12 auch als erste Stufe bezeichnet werden. Demgemäß kann die zweite Schubgelenkeinheit 14 auch als zweite Stufe bezeichnet werden. Ferner ist beim Möbelbeschlag 10 eine Antriebseinheit 16 vorgesehen, die beispielhaft mit der ersten Schubgelenkeinheit 12 gekoppelt ist. Die Antriebseinheit 16 kann grundsätzlich einen motorischen Antrieb, alternativ jedoch auch einen manuellen Antrieb des Möbelbeschlags 10 ermöglichen. Auch eine Kombination eines motorischen Antriebs mit einem manuellen Antrieb, der nur als Notantrieb ausgestaltet sein kann, ist vorstellbar.

Wesentliche Komponenten des in den Figuren 1 bis 5 gezeigten Möbelbeschlags 10 sind ein Halteträger 20, ein erstes Schubelement 22, das längsverschieblich am Halteträger 20 aufgenommen ist, ein zweites Schubelement 24, das schwenkbar am ersten Schubelement 22 aufgenommen ist, und ein drittes Schubelement 26, das längsverschieblich am zweiten Schubelement 24 aufgenommen ist. Gemeinsam können der Halteträger 20 und das erste Schubelement 22 der ersten Schubgelenkeinheit 12 zugeordnet sein. Gemeinsam können das zweite Schubelement 24 und das dritte Schubelement 26 der zweiten Schubgelenkeinheit 14 zugeordnet sein. Mit anderen Worten können der Halteträger 20 und das erste Schubelement 22 die erste Stufe des Möbelbeschlags 10 bilden. Demgemäß können das zweite Schubelement 24 und das dritte Schubelement 26 die zweite Stufe des Möbelbeschlags 10 bilden.

Der anhand der Figuren 1 bis 5 veranschaulichte Halteträger 20 weist beispielhaft ein erstes Trägerteil 40 und ein zweites Trägerteil 42 auf, die miteinander gefügt sind, um zwischen sich einen Spalt für das erste Schubelement 22 zu definieren, in dem dieses längsverschieblich geführt ist. Das erste Trägerteil 40 und das zweite Trägerteil 42 können im Wesentlichen symmetrisch, insbesondere spiegelsymmetrisch gestaltet sein. Am ersten Trägerteil 40 ist ein Versatzstück 44 ausgebildet. Am zweiten Trägerteil 42 ist ein Versatzstück 46 ausgebildet. Die Versatzstücke 44, 46 definieren zwischen sich einen Aufnahmebereich, in dem Komponenten der Antriebseinheit 16 aufnehmbar sind. Ferner ist am ersten Trägerteil 40 eine erste Befestigungslasche 50 ausgebildet, die etwa durch eine Abkantung erzeugbar ist. Am zweiten Trägerteil 42 ist eine zweite Befestigungslasche 52 ausgebildet, die etwa durch eine Abkantung erzeugbar ist. Die Befestigungslaschen 50, 52 können eine gemeinsame Aufnahmeebene definieren und etwa mit Ausnehmungen, beispielsweise Löchern oder dergleichen, versehen sein, über die der Möbelbeschlag 20 an einem Möbelstück, etwa rahmenseitig, fixierbar ist.

Die Trägerteile 40, 42 können im Wesentlichen aus flachem Halbzeug, insbesondere aus Blechmaterial hergestellt werden. Durch geeignete Trennprozesse und/oder Umformprozesse können die Versatzstücke 44, 46 sowie die Befestigungslaschen 50, 52 ausgebildet werden.

Der Halteträger 20 und das erste Schubelement 22 sind über ein Schubgelenk miteinander verbunden. Das Schubgelenk umfasst eine Längsnut 56 und zwei voneinander beabstandete Führungsbolzen 58. Beispielhaft kann die Längsnut 56 im ersten Schubelement 22 ausgebildet sein. Demgemäß können zwei oder mehr Führungsbolzen 58 voneinander beabstandet am Halteträger 20 aufgenommen sein und im gefügten Zustand in die Längsnut 56 eingreifen. Auf diese Weise ist das erste Schubelement 22 längsverschieblich am Halteträger 20 aufgenommen.

Die erste Schubgelenkeinheit 12 und die zweite Schubgelenkeinheit 14 sind durch einen ersten Koppelmechanismus 30 miteinander gekoppelt. Der erste Koppelmechanismus 30 umfasst ein erstes Koppelstück 32 und ein zweites Koppelstück 34. Die Koppelstücke, 32, 34 können auch als Hebel oder Koppelhebel bezeichnet werden. Das erste Koppelstück 32 ist über jeweils ein Drehgelenk mit dem Halteträger 20 und dem zweiten Schubelement 24 verbunden, vergleiche insbesondere Fig. 1. Das zweite Koppelstück 34 ist über jeweils ein Drehgelenk mit dem ersten Schubelement 22 und dem dritten Schubelement 26 verbunden, vergleiche insbesondere die Figuren 3, 4 und 5.

Somit bilden der Halteträger 20, das erste Schubelement 22, das zweite Schubelement 24 und das erste Koppelstück 32 einen Koppeltrieb, insbesondere einen Viergelenkmechanismus, der auch als ebene Viergelenkkette bezeichnet werden kann. Das Viergelenk weist drei Drehgelenke und ein Schubgelenk (Bezugszeichen 58, 60) auf. Die Drehgelenke sind jeweils zwischen dem ersten Koppelstück 32 und dem Halteträger 20 sowie dem zweiten Schubelement 24; und zwischen dem zweiten Schubelement 24 und dem ersten Schubelement 22 ausgebildet.

Der Drehpunkt zwischen dem ersten Schubelement 22 und dem zweiten Schubelement 24 umfasst eine Lagerung 68. Die Drehgelenke zwischen dem ersten Koppelstück 32 und dem Halteträger 20 bzw. dem zweiten Schubelement 24 können auch als Koppelpunkte 70, 72 bezeichnet werden, vergleiche etwa Fig. 2 und Fig. 3.

Das zweite Koppelstück 34 bildet gemeinsam mit dem ersten Schubelement 22, dem zweiten Schubelement 24 und dem dritten Schubelement 26 ein zweites Koppelgetriebe, das insbesondere als ebenes Koppelgetriebe ausgebildet ist. Das Koppelgetriebe kann auch als Viergelenkmechanismus bezeichnet werden. Das Viergelenk umfasst drei Drehgelenke und ein Schubgelenk. Das Schubgelenk ist zwischen dem zweiten Schubelement 24 und dem dritten Schubelement 26 ausgebildet. Das Schubgelenk wird beispielhaft durch eine Längsnut 62 und zwei Führungsbolzen 64 gebildet. Beispielhaft ist die Längsnut 62 am zweiten Schubelement 24 ausgebildet. Demgemäß sind die Führungsbolzen 64 voneinander beabstandet am dritten Schubelement 26 aufgenommen, um dieses längsverschieblich am zweiten Schubelement 24 aufzunehmen.

Ferner weist das Viergelenk drei Drehgelenke auf. Ein Drehgelenk wird durch die Lagerung 68 bereitgestellt, an der das zweite Schubelement 24 schwenkbar oder verdrehbar am ersten Schubelement 22 aufgenommen ist. Weitere Drehgelenke werden durch Koppelpunkt 74, 76 bereitgestellt. Der Koppelpunkt 74 umfasst ein Drehgelenk zwischen dem zweiten Koppelstück 34 und dem ersten Schubelement 22. Der Koppelpunkt 76 umfasst ein Drehgelenk zwischen dem zweiten Koppelstück 34 und dem dritten Schubelement 26.

Insbesondere der Fig. 5 ist entnehmbar, dass der Möbelbeschlag 10 besonders kompakt und insbesondere flach ausgeführt ist. Insbesondere ist der erste Koppelmechanismus 30 eben nicht als räumlicher Koppelmechanismus ausgeführt, sondern vielmehr als Kombination zweier ebener Viergelenkmechanismen. Die Breite des Möbelbeschlags 10 ändert sich nicht, wenn dieser verstellt wird.

Angenommen, dass das Blechmaterial, aus dem der Halteträger 20, die Schubelemente 22, 24, 26 sowie die Koppelstücke 32, 34 gefertigt sind, eine einheitliche Dicke aufweist, beträgt die minimale Gesamtdicke des Möbelbeschlags 10 lediglich das Vierfache der einfachen Blechdicke, da maximal vier entsprechende Komponenten übereinander angeordnet sind, vergleiche insbesondere Fig. 5, aus der ersichtlich ist, dass etwa die Trägerteile 40, 42, das zwischen den Trägerteilen 40, 42 aufgenommene erste Schubelement 22 und das am Halteträger 20 aufgenommene erste Koppelstück 32 einen Bereich maximaler Dicke des Möbelbeschlags 10 ausbilden. Es versteht sich, dass Anbauteile, Befestigungsteile und Ähnliches vorgesehen sein können, die über die besagte Breite (Höhe) des Möbelbeschlags 10 hinausragen, vergleiche etwa die Befestigungslaschen 50, 52 sowie Komponenten der Antriebseinheit 16.

Insbesondere der Fig. 5 ist entnehmbar, dass das erste Schubelement 22 mit einer Spindel oder Gewindespindel 80 gekoppelt ist. Die Spindel 80 ist über ein Anschlussstück 82 mit dem ersten Schubelement 22 verbunden. Die Spindel 80 ist ferner an einem Lagerstück 84 aufgenommen, das wiederum über Lageraufnahmen 86 (vergleiche Fig. 1) am Halteträger 20 im Bereich der Versatzstücke 44, 46 aufgenommen ist. Auf diese Weise kann über die Antriebseinheit 16 derart auf die Spindel 80 eingewirkt werden, dass sich eine Längsverschiebung (Hubbewegung) des ersten Schubelements 22 in Bezug auf den Halbträger 20 ergibt. Wenn der Möbelbeschlag 10 mit einer motorischen Antriebseinheit 16 versehen ist, weist die Antriebseinheit 16 einen Elektromotor 88 auf, der mit einer Kraftübertragungseinrichtung 90 gekoppelt ist, die auch als Getriebe bezeichnet werden kann. Über die Kraftübertragungseinrichtung 90 kann der Motor 88 auf die Gewindespindel oder Spindel 80 einwirken, um das erste Schubelement 22 in Bezug auf den Halteträger 20 zu verschieben.

In ähnlicher Weise könnte jedoch auch eine Handbetätigung ausgestaltet sein, bei der ein Benutzer etwa über ein Handrad oder Ähnliches auf die Spindel 80 einwirkt, um den Möbelbeschlag 10 zu verstellen. Auch bei einer Handbetätigung kann eine etwa als Getriebe ausgeführte Kraftübertragungseinrichtung 90 vorgesehen sein. In zumindest einigen Ausgestaltungen ist es bevorzugt, wenn die Kraftübertragungseinrichtung 90 als sogenannte selbsthemmende Kraftübertragungseinrichtung 90 gestaltet ist. Auf diese Weise kann der Möbelbeschlag 10 sicher in seiner jeweiligen Position verharren, ohne dass es zu einer unerwünschten Selbstverstellung kommt.

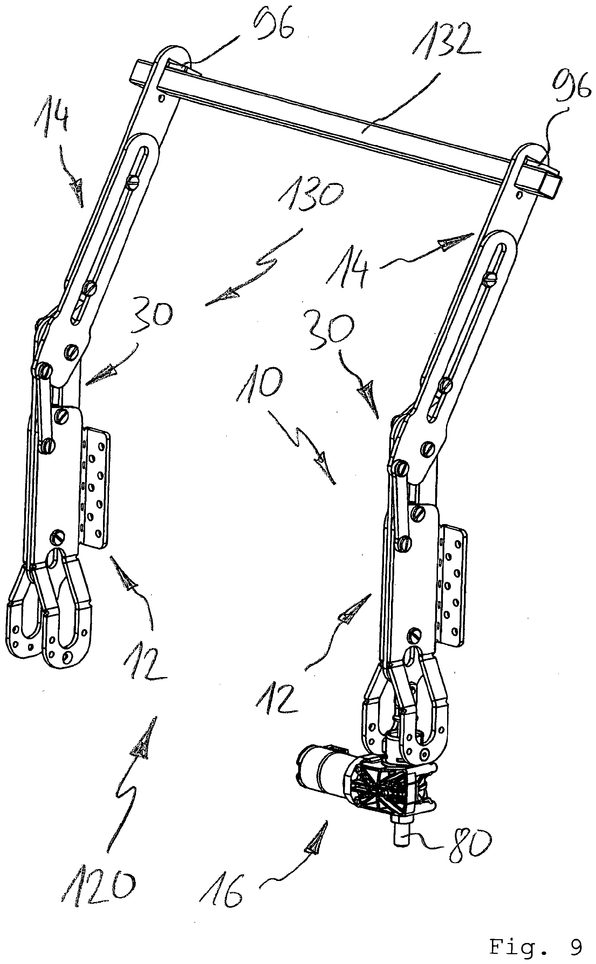

Am dritten Schubelement 26 ist eine Aussparung 94 vorgesehen, der eine Lasche 96 benachbart ist, die etwa eine Abkantung gegenüber einer Längserstreckung des dritten Schubelements 26 umfassen kann. Die Aussparung 94 und die dieser zugeordnete Lasche 96 können genutzt werden, um das dritte Schubelement 26 in gewünschter Weise am Möbelstück festzulegen, etwa an Komponenten des Möbelstücks, die verstellt werden sollen, beispielsweise eine Kopfauflage oder eine Fußauflage. Alternativ können die Aussparung 94 und die dieser zugeordnete Lasche 96 auch dazu benutzt werden, eine Anordnung zu erzeugen, die zwei oder mehr gleichartiger Möbelbeschläge 10 aufweist, vergleiche auch Fig. 9.

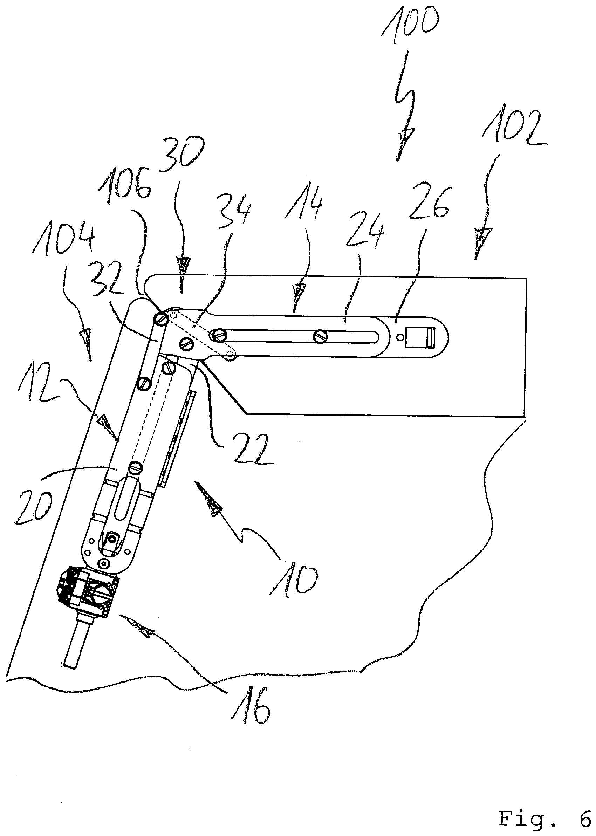

Anhand der Figuren 6, 7 und 8 wird eine beispielhafte Verwendung des Möbelbeschlags 10 veranschaulicht, der vorstehend in Zusammenhang mit den Figuren 1 bis 5 detailliert beschrieben wurde. Die Figuren 6, 7 und 8 zeigen in schematisch stark vereinfachter Darstellung eine Teilansicht eines Möbelstücks 100, das auch als Sitzmöbel bezeichnet werden kann. Das Möbelstück 100 weist ein Kopfteil 102 auf, das auch als Kopfauflage bezeichnet werden kann. Das Kopfteil 102 ist über den Möbelbeschlag 10 an einer Rücklehne 104 des Möbelstücks 100 aufgenommen. In geeigneter Weise kann zu diesem Zweck der Möbelbeschlag 10 an einer jeweiligen Rahmenstruktur der Rücklehne 104 und des Kopfteils 102 festgelegt sein.

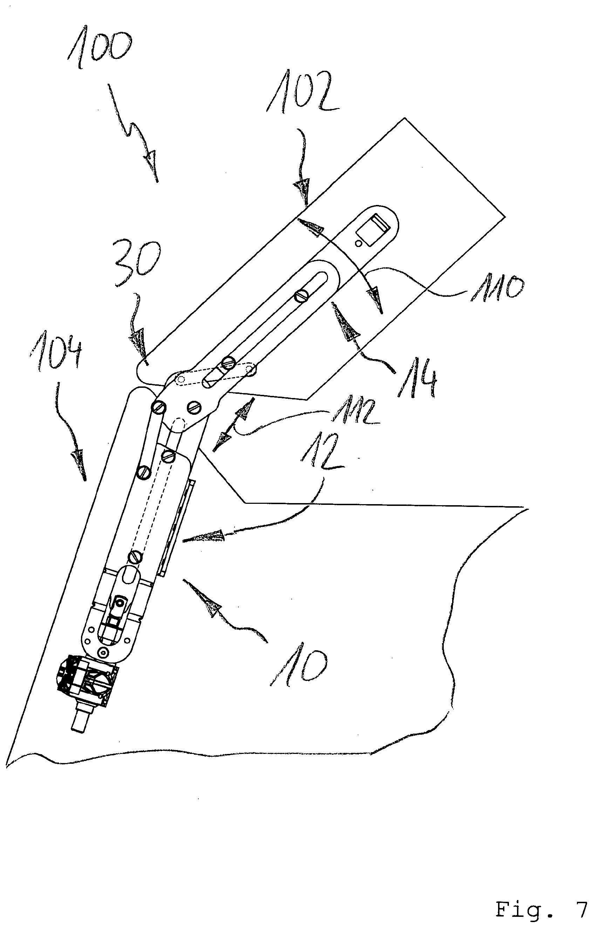

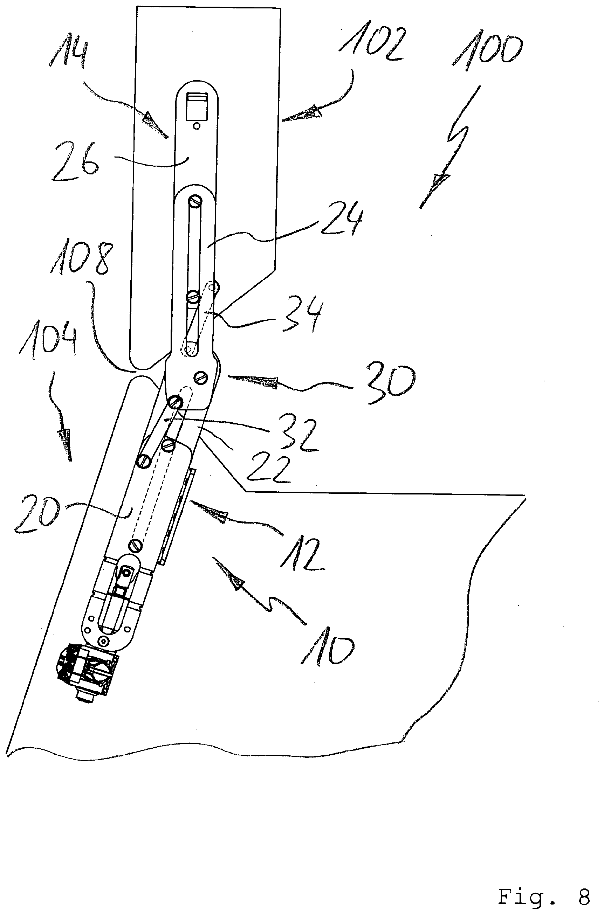

Fig. 6 zeigt das Möbelstück 100 in einem Zustand, bei dem das Kopfteil 102 eingefahren oder eingeklappt ist. Fig. 8 zeigt einen Zustand des Möbelstücks 100, bei dem das Kopfteil 102 vollständig ausgeklappt oder ausgefahren ist. Fig. 7 zeigt eine Zwischenstellung zwischen den Zuständen, die anhand der Figuren 6 und 8 veranschaulicht werden. Beim Übergang zwischen dem ersten, eingefahrenen Zustand gemäß Fig. 6 und dem zweiten, ausgefahrenen Zustand gemäß Fig. 8 erfolgt nicht nur eine Verschwenkung zwischen dem Kopfteil 102 und der Rückenlehne 104 (vergleiche einen Doppelpfeil 110 in Fig. 7), sondern auch ein Ausfahren bzw. eine Verschiebung des Kopfteils 102 bzw. von dessen Drehpunkt in Bezug auf die Rücklehne 104 (vergleiche einen Doppelpfeil 112 in Fig. 7, der die Ausfahrbewegung kennzeichnet). Auf diese Weise kann das Möbelstück 100 etwa im ersten, eingefahrenen Zustand gemäß Fig. 6 einen sehr engen Spalt 106 zwischen dem Kopfteil 102 und der Rücklehne 104 aufweisen. Im zweiten, ausgefahrenen Zustand gemäß Fig. 6 ist hingegen ein deutlich größerer Spalt 108 zwischen dem Kopfteil 102 und der Rücklehne 104 gewährleistet. Die Vergrößerung des Spalts ist in erster Linie auf die Ausfahrkomponente der kombinierten Schub-/Schwenkbewegung des Möbelbeschlags 10 zurückzuführen.

Insgesamt vollzieht nämlich das dritte Schubelement 26 gegenüber dem Halteträger 20 bei der Verstellung des Möbelbeschlags eine kombinierte Bewegung, die eine Schwenkkomponente (Pfeil 110) und eine Schubkomponente (Pfeil 112) aufweist. Die kombinierte Bewegung kann etwa zur Straffung von Polstern des Möbelstücks 100 beitragen, so dass dies auch in der zweiten, ausgefahrenen Stellung gemäß Fig. 8 optisch hochwertig gestaltet ist. Die Ausfahrkomponente (Hubkomponente) der kombinierten Verstellbewegung kann hingegen auch technischen Zwecken dienen.

Fig. 9 veranschaulicht eine Anordnung 120, die zwei grundsätzlich ähnlich oder gar gleich gestaltete Möbelbeschläge 10, 130 umfasst. Der Möbelbeschlag 10 ist insbesondere gemäß der anhand der Figuren 1 bis 5 veranschaulichten Ausgestaltung ausgebildet. Der Möbelbeschlag 130 ist grundsätzlich in ähnlicher Weise ausgebildet, so dass hier auf eine nähere Beschreibung verzichtet wird. Der Möbelbeschlag 130 unterscheidet sich jedoch dahingehend vom Möbelbeschlag 10, dass beim Möbelbeschlag 130 keine eigene Antriebseinheit ausgebildet ist. Hingegen weist der Möbelbeschlag 10 die Antriebseinheit 16 auf, die insbesondere als elektromotorische Antriebseinheit gestaltet ist und auf die Spindel 80 einwirkt, die mit dem ersten Schubelement 22 gekoppelt ist. Auch die Spindel 80 muss nicht zwingend beim Möbelbeschlag 130 vorgesehen sein.

Die Möbelbeschläge 10, 130 sind über ein Verbindungsstück 132 miteinander gekoppelt, das auch als Befestigungsrohr gestaltet sein kann. Das Verbindungstück 132 greift jeweils in die Aussparung 94 der dritten Schubelemente 26 der Möbelbeschläge 10, 130 ein. Ferner ist es vorstellbar, auch die Laschen 96 zur Befestigung des Verbindungsstücks 132 zu nutzen. Auf diese Weise kann sich eine hinreichend starre Kopplung oder Verbindung zwischen den Möbelbeschlägen 10, 130 ergeben. Dies hat zur Folge, dass sich beide Möbelbeschläge 10, 130 im Wesentlichen synchron verstellen lassen. Hierbei ist der Möbelbeschlag 10 führend, da bei diesem eine Antriebseinheit 16 vorgesehen ist. Der Möbelbeschlag 10 kann somit als primärer Möbelbeschlag oder auch als Master-Möbelbeschlag bezeichnet werden. Der Möbelbeschlag 130 hingegen wird passiv angetrieben, da er über das Verbindungsstück 132 mit dem Möbelbeschlag 10 zwangsgekoppelt ist. Demgemäß kann der zweite Möbelbeschlag 130 etwa als sekundärer Möbelbeschlag oder als Slave-Möbelbeschlag bezeichnet werden. Die Anordnung 120 gemäß Fig. 9 eignet sich insbesondere für Möbelstücke 100 mit einer entsprechenden Breite. Dank der beiden Möbelbeschläge 10, 130 kann an voneinander beabstandeten Punkten an die zu verstellenden Komponenten des Möbelstücks 100 angegriffen werden. Selbstverständlich sind auch Anordnungen 120 vorstellbar, die mehr als zwei Möbelbeschläge 10, 130 aufweisen.

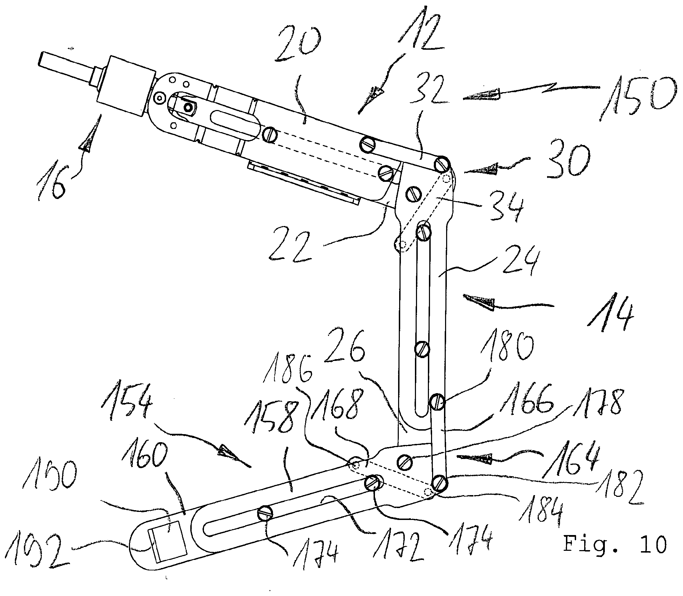

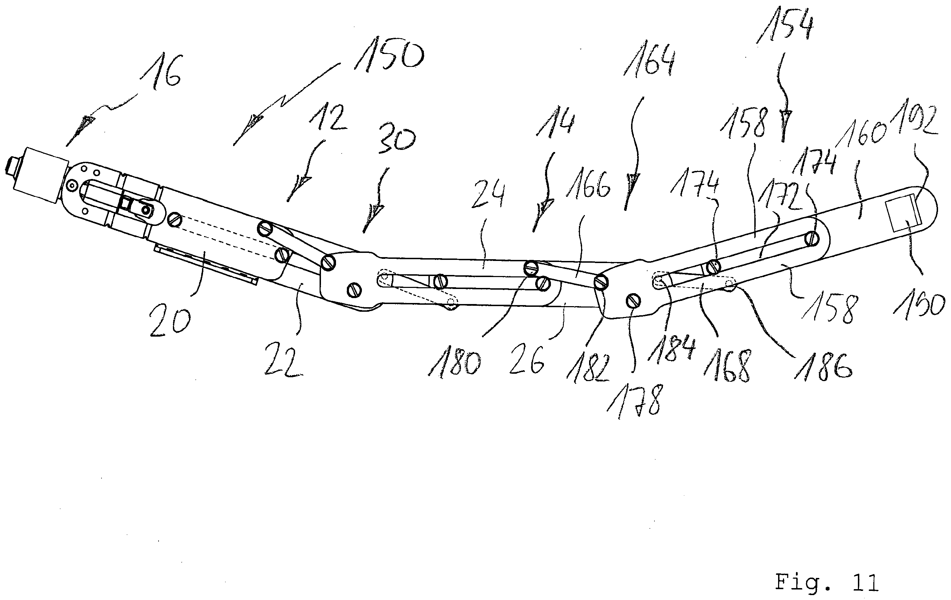

Anhand der Figuren 10 und 11 wird eine alternative Ausgestaltung eines Möbelbeschlags veranschaulicht, der insgesamt mit 150 bezeichnet ist. Vom Grundsatz her ist der Möbelbeschlag 150 dem anhand der Figuren 1 bis 5 veranschaulichten Möbelbeschlag 10 zumindest ähnlich gestaltet. Insbesondere weist der Möbelbeschlag 150 auch wie der Möbelbeschlag 10 eine erste Schubgelenkeinheit 12, eine zweite Schubgelenkeinheit 14 sowie eine Antriebseinheit 16 auf, die der ersten Schubgelenkeinheit 12 zugeordnet ist. Ferner weist auch der Möbelbeschlag 150 einen ersten Koppelmechanismus 30 auf, der die erste Schubgelenkeinheit 12 und die zweite Schubgelenkeinheit 14 derart verbindet, dass sich beim Verstellen des Möbelbeschlags 150 zwischen den Schubgelenkeinheiten 12, 14 eine kombinierte Schwenk-/Schubbewegung ergibt. Zur näheren Beschreibung der ersten Schubgelenkeinheit 12, der zweiten Schubgelenkeinheit 14, der Antriebseinheit 16 sowie des ersten Koppelmechanismus 30 des Möbelbeschlags 150 wird daher auf die vorstehenden Ausführungen zu den Figuren 1 bis 5 verwiesen.

Der Möbelbeschlag 150 unterscheidet sich jedoch im Wesentlichen dadurch vom Möbelbeschlag 10 gemäß den Figuren 1 bis 5, dass eine dritte Schubgelenkeinheit 154 vorgesehen ist. Somit kann der Möbelbeschlag 150 auch als dreistufiger Möbelbeschlag 150 bezeichnet werden. Die Schubgelenkeinheiten 12, 14 und 154 sind miteinander gekoppelt und bilden eine kinematische Kette. Die Schubgelenkeinheit 14 ist zwischen den Schubgelenkeinheiten 12 und 154 angeordnet. Bei Betrachtung einer Relativbewegung zwischen der dritten Schubgelenkeinheit 154 und der ersten Schubgelenkeinheit 12 wird deutlich, dass mit dem Möbelbeschlag 150 wesentlich größere Verschwenkwinkel und wesentlich größere Hübe zwischen den Schubgelenkeinheiten 154 und 12 erzeugbar sind, als dies beim Möbelbeschlag 10 bei den Schubgelenkeinheiten 12 und 14 der Fall ist.

Fig. 10 zeigt eine erste, eingefahrene oder eingeklappte Stellung des Möbelbeschlags 150. Fig. 11 zeigt eine zweite, ausgeklappte oder ausgefahrene Stellung des Möbelbeschlags 150. In der ersten Stellung gem. Fig. 1 sind die Schubgelenkeinheiten 12, 14 und 154 etwa U-förmig angeordnet. Hingegen sind die Schubgelenkeinheiten 12, 14 beim Möbelbeschlag 10 in der ersten Stellung gemäß Fig. 1 etwa L-förmig angeordnet. In der zweiten Stellung weisen sowohl der Möbelbeschlag 10 (vergleiche Fig. 3) als auch der Möbelbeschlag 150 (vergleiche Fig. 11) eine gestreckte Orientierung auf, wobei die zweite Schubgelenkeinheit 14 (beim Möbelbeschlag 10) sowie die zweite Schubgelenkeinheit 14 und die dritte Schubgelenkeinheit 154 (beim Möbelbeschlag 150) sogar leicht über eine ideale geradlinige Orientierung in Bezug auf die erste Schubgelenkeinheit 12 hinaus verschwenkbar sind.

Alternativ zur anhand der Figuren 10 und 11 veranschaulichten Ausgestaltung des Möbelbeschlags 150 sind Ausführungsformen denkbar, bei denen der Möbelbeschlag 150 in der ersten (eingefahrenen) Stellung zwischen seinen benachbarten Schubgelenkeinheiten 12, 14 und 154 jeweils einen Winkel von etwa 90° aufweist, und bei denen der Möbelbeschlag 150 in der zweiten (ausgefahrenen) Stellung zwischen seinen benachbarten Schubgelenkeinheiten 12, 14 und 154 jeweils einen Winkel von etwa 180° aufweist. Dies kann durch entsprechende Gestaltungen der Koppelmechanismen 30, 164 bewirkt werden. Es versteht sich, dass ohne Weiteres auch davon abweichende Konfigurationen verwirklicht werden können.

Der Möbelbeschlag 150 weist ein viertes Schubelement 158 und ein fünftes Schubelement 160 auf. Das vierte Schubelement 158 und das fünfte Schubelement 160 sind der dritten Schubgelenkeinheit 154 zugeordnet. Das vierte Schubelement 158 und das fünfte Schubelement 160 sind zueinander längsverschieblich miteinander gekoppelt. Die dritte Schubgelenkeinheit 154 ist über einen zweiten Koppelmechanismus 164 mit der zweiten Schubgelenkeinheit 14 verbunden. Der zweite Koppelmechanismus 164 ist grundsätzlich dem ersten Koppelmechanismus 30 zumindest ähnlich gestaltet. Demgemäß umfasst der zweite Koppelmechanismus 164 des Möbelbeschlags 150 zwei Viergelenkmechanismen, die unter Verwendung des zweiten Schubelements 24, des dritten Schubelements 26, des vierten Schubelements 158 und des fünften Schubelements 160 ausgebildet werden. Der zweite Koppelmechanismus 164 weist ein drittes Koppelstück 166 und ein viertes Koppelstück 168 auf. Die Koppelstücke 166, 168 können auch als Hebel oder Koppelhebel bezeichnet werden.

Jeder der Viergelenkmechanismen umfasst ein Schubgelenk, welches zwischen zwei miteinander gekoppelten Schubelementen 24, 26 (bei der zweiten Schubgelenkeinheit 14) sowie Schubelementen 158, 160 (bei der dritten Schubgelenkeinheit 164) ausgebildet ist. Zu diesem Zweck ist beispielhaft am vierten Schubelement 158 eine Längsnut 172 ausgebildet, in die zwei Führungsbolzen 174 eingreifen, die zueinander beabstandet am fünften Schubelement 160 angeordnet sind. Auf diese Weise ist das fünfte Schubelement 160 über die Führungsbolzen 174 in der Längsnut 172 des vierten Schubelements 158 längsverschieblich aufgenommen.

Das vierte Schubelement 158 ist über ein Drehgelenk, das durch eine Lagerung 178 gebildet ist, am dritten Schubelement 26 verschwenkbar aufgenommen. Das dritte Koppelstück 166 verbindet das zweite Schubelement 24 und das vierte Schubelement 158. Zu diesem Zweck sind Drehgelenke vorgesehen, vergleiche einen Koppelpunkt 180 zwischen dem dritten Koppelstück 166 und dem zweiten Schubelement 24 sowie einen Koppelpunkt 182 zwischen dem dritten Koppelstück 166 und dem vierten Schubelement 158. Gemeinsam bilden somit das zweite Schubelement 24, das dritte Schubelement 26, das vierte Schubelement 158 sowie das dritte Koppelstück 166 ein Viergelenk, insbesondere ein ebenes Viergelenk, das drei Drehgelenke sowie ein Schubgelenk (zwischen dem zweiten Schubelement 24 und dem dritten Schubelement 26) umfasst.

Das vierte Koppelstück 168 verbindet das dritte Schubelement 26 und das fünfte Schubelement 160. Zu diesem Zweck ist zwischen dem vierten Koppelstück 168 und dem dritten Schubelement 26 ein Drehgelenk vorgesehen, vergleiche einen Koppelpunkt 184. Ferner ist zwischen dem vierten Koppelstück 168 und dem fünften Schubelement 160 ein Drehgelenk vorgesehen, vergleichen einen Koppelpunkt 186 in den Figuren 10 und 11. Insgesamt bilden auch das dritte Schubelement 26, das vierte Schubelement 158, das fünfte Schubelement 160 sowie das vierte Koppelstück 168 ein Viergelenk aus, das auch als ebenes Viergelenk oder als Viergelenkgetriebe bezeichnet werden kann. Das Viergelenk umfasst drei Drehgelenke sowie ein Schubgelenk. Ein Drehgelenk wird durch die Lagerung 178 zwischen dem dritten Schubelement 26 und dem vierten Schubelement 158 definiert. Somit weisen beiden Viergelenke, die beim zweiten Koppelmechanismus 164 vorgesehen sind, ein gemeinsames Drehgelenk auf, die Lagerung 178. Zwei weitere Drehgelenke werden durch die Koppelpunkte 184, 186 bereitgestellt. Das Schubgelenk ist durch die Längsnut 172 sowie die Führungsbolzen 174 gebildet, die zwischen dem vierten Schubelement 158 und dem fünften Schubelement 160 ausgebildet sind.

Es versteht sich, dass insbesondere die Koppelmechanismen 30, 164 modifiziert werden können, um Soll-Lagen der Schubgelenkeinheiten 12, 14 (Möbelbeschlag 10) bzw. 12, 14, 154 (Möbelbeschlag 150) zu ändern.

Je nach Gestaltung des ersten Koppelmechanismus 30 und des zweiten Koppelmechanismus 164 können die erste Schubgelenkeinheit 12 und die zweite Schubgelenkeinheit 14 sowie die zweite Schubgelenkeinheit 14 und die dritte Schubgelenkeinheit 154 relativ zueinander jeweils gleichartige und gleichsinnige Bewegungen vollziehen, wenn der Möbelbeschlag 150 verstellt wird. Es ist jedoch auch vorstellbar, etwa den zweiten Koppelmechanismus 164 im Gegensatz zum ersten Koppelmechanismus 30 derart auszuführen, dass die Relativbewegung zwischen der dritten Schubgelenkeinheit 154 und der zweiten Schubgelenkeinheit 14 beim Verstellen des Möbelbeschlags 150 gegensinnig zur Relativbewegung zwischen der zweiten Schubgelenkeinheit 14 und der ersten Schubgelenkeinheit 12 ist. Mit anderen Worten kann ein solcher modifizierter Möbelbeschlag etwa statt der U-förmigen Konfiguration, die in Fig. 10 gezeigt ist, zumindest zeitweise einen Zustand aufweisen, in dem eine Z-förmige Konfiguration gegeben ist. Andere Zustände sind ohne Weiteres denkbar.

Ähnlich der beim Möbelbeschlag 10 gemäß den Figuren 1 bis 5 vorgesehenen Aussparung 94 und der dieser zugeordneten Lasche 96, die dort beim dritten Schubelement 26 ausgebildet sind, kann der Möbelbeschlag 150 gemäß den Figuren 10 und 11 eine Aussparung 190 und einen dieser zugeordnete Lasche 192 aufweisen, die beim fünften Schubelement 160, also bei der dritten Schubgelenkeinheit 154 ausgebildet sind. Auf diese Weise kann, ähnlich wie bei der Anordnung 120 gemäß Fig. 9, eine Anordnung geschaffen werden, die mehrere Möbelbeschläge 150 aufweist, die miteinander durch ein geeignetes Verbindungsstück gekoppelt sind, um synchron verstellt werden zu können. Es versteht sich, dass nur einer der Möbelbeschläge 150 mit einer entsprechenden Antriebseinheit 16 versehen zu sein braucht.

Es ist grundsätzlich vorstellbar, in Fortschreibung der zweistufigen Ausgestaltung des Möbelbeschlags 10 gemäß den Figuren 1 bis 5 sowie des dreistufigen Möbelbeschlags 150 gemäß den Figuren 10 und 11 weitere Stufen, also weitere Schubgelenkeinheiten vorzusehen, die die kinematische Kette des Möbelbeschlags verlängern. Insbesondere ist es vorstellbar, vier Schubgelenkeinheiten, fünf Schubgelenkeinheiten oder gar mehr Schubgelenkeinheiten über geeignete Koppelmechanismen miteinander zu koppeln.

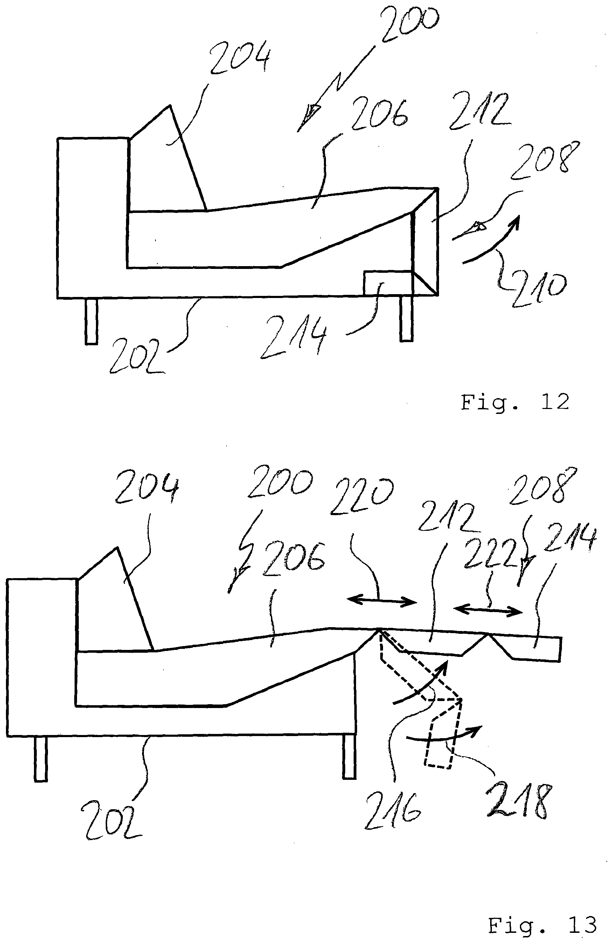

Anhand der Figuren 12 und 13 wird eine vorteilhafte Anwendung des Möbelbeschlags 150 veranschaulicht. Im Gegensatz zu den Figuren 7 und 8, die eine beispielhafte Verwendung des Möbelbeschlags 10 zur Kopfteilverstellung zeigen, veranschaulichen Fig. 12 und Fig. 13 eine Verwendung des Möbelbeschlags 150 zur Fußteilverstellung bei einem Möbelstück 200, insbesondere einem Sitzmöbel. Die Figuren 12 und 13 zeigen jeweils schematisch stark vereinfacht eine Seitenansicht des Möbelstücks 200, etwa eines Sofas oder eines Sessels. Das Möbelstück 200 weist ein Gestell 202, eine Rücklehne 204 sowie ein Sitzauflage oder Sitzfläche 206 auf. Ferner weist das Möbelstück 200 eine integrierte Fußauflage 208 auf. Das Möbelstück 200 kann zumindest zwei Konfigurationen oder Zustände einnehmen. Fig. 12 veranschaulicht einen ersten Zustand, in dem die Fußauflage 208 vollständig eingefahren bzw. eingeklappt ist. In diesem Zustand ist die Fußauflage 208 ohne wesentliche Funktion. Fig. 13 zeigt einen zweiten Zustand, in dem die Fußauflage 208 vollständig ausgefahren oder ausgeklappt ist. Im zweiten Zustand kann somit ein Benutzer des Möbelstücks etwa seine Beine oder Füße auf der Fußauflage 208 ablegen. Ein mit 210 bezeichneter Pfeil in Fig. 12 veranschaulicht die grundsätzliche Verstellbarkeit der Fußauflage 208.

Die Fußauflage 208 weist ein Verbindungssegment oder Verbindungsstück 212 und ein Auflagesegment oder Auflagestück 214 auf. Das Verbindungsstück 212 ist zwischen der Sitzfläche 206 (bzw. einem Rahmen oder Gestell der Sitzfläche 206) und dem Auflagestück 214 angeordnet. Die Sitzfläche 206 (bzw. deren Rahmen oder Gestell), das Verbindungsstück 212 und das Auflagestück 214 sind über einen Möbelbeschlag miteinander verbunden, der grundsätzlich dem anhand der Figuren 10 und 11 veranschaulichen Möbelbeschlag 150 entspricht. Aus Veranschaulichungsgründen ist der Möbelbeschlag 150 in den Figuren 12 und 13 nicht explizit dargestellt. Der erste Zustand des Möbelbeschlags 150 gemäß Fig. 10 entspricht im Wesentlichen dem ersten Zustand der Fußauflage 208, der in Fig. 12 veranschaulicht ist. Der zweite Zustand des Möbelbeschlags 150 gemäß Fig. 11 entspricht im Wesentlichen dem zweiten Zustand der Fußauflage 208, der in Fig. 13 veranschaulicht ist.

In Fig. 13 ist ferner durch gestrichelte Linien ein Zwischenzustand bzw. eine Zwischenstellung der Fußauflage 208 angedeutet. Es versteht sich, dass zumindest in einigen Ausgestaltungen des Möbelbeschlags 150 auch Zwischenstellungen denkbar sind, in denen der Möbelbeschlag 150 und somit auch die Fußauflage 208 fixierbar ist.

Beim Ausfahren oder Ausklappen der Fußauflage 208 ergibt sich eine kombinierte Bewegung der Segmente (Verbindungsstück 212, Auflagestück 214) der Fußauflage 208. Das Verbindungsstück 212 wird in Bezug auf die Sitzfläche 206 bewegt, mit der es gelenkig verbunden ist. Das Auflagestück 214 wird in Bezug auf das Verbindungsstück 212 bewegt, mit dem es gelenkig verbunden ist. Wie vorstehend bereits in Zusammenhang mit den Figuren 6 bis 8 veranschaulicht, erfolgt hierbei für die beteiligten Komponenten oder Segmente nicht nur eine Schwenkbewegung, sondern auch eine Längsbewegung (Hubbewegung). Die Bewegungskomponenten der Bewegung des Verbindungsstücks 212 sind in Fig. 13 durch einen geradlinigen Pfeil 220 (Längsbewegung oder "Dehnung") sowie einen gekrümmten Pfeil 216 (Schwenkbewegung) angedeutet. Gleichermaßen sind die Bewegungskomponenten der Bewegung des Auflagestücks 214 in Fig. 13 durch einen geradlinigen Pfeil 222 (Längsbewegung oder "Dehnung") sowie einen gekrümmten Pfeil 218 (Schwenkbewegung) angedeutet. Somit kann sich etwa beim Ausfahren der Fußauflage 208 neben der Schwenkbewegung ferner eine "Dehnung" oder "Straffung" der Fußauflage 208 ergeben. Auf diese Weise können etwa Polsterungen oder Bezüge des Möbelstücks 200 gestrafft werden. Es kann sich ein im Wesentlichen faltenfreier Zustand ergeben, der als hochwertig und optisch ansprechend wahrnehmbar ist.

Es ist vorstellbar, dass Möbelstücke sowohl eine Kopfteilverstellung gemäß den Fig. 6 bis 8 als auch eine Fußteilverstellung gemäß dem Fig. 12 und 13 aufweisen.

Es versteht sich, dass die Möbelbeschläge 10, 150 sowie Anordnungen 120 umfassend mehrere Möbelbeschläge 10, 130, 150 auch in anderer Weise bei Möbelstücken verwendbar sind. Gleichwohl ist in der Kopfteilverstellung und/oder der Fußteilverstellung ein wesentliches Anwendungsgebiet zu sehen. Die Möbelbeschläge 10, 150 können ferner jedoch etwa auch bei Klapptischen, ausklappbaren Armlehnen, Klappliegen und ähnlichen Möbelstücken verwendet werden. Ein weiteres vorteilhaftes Anwendungsgebiet kann Arbeitsmöbel und Ähnliches betreffen. Die Verstellbarkeit der Möbelbeschläge 10, 150 lässt sich beispielsweise für ausklappbare oder ausfahrbare Träger für Bildschirme oder sonstige Anzeigegeräte/Arbeitsgerät nutzen. Ferner ist es vorstellbar, mit den Möbelbeschlägen 10, 150 Träger zu verstellen, an denen etwa Eingabegeräte (Tastaturen oder dergleichen) aufgenommen sind, die zwischen einer ersten, eingefahrenen Stellung und einer zweiten, ausgefahrenen Stellung zu verlagern sind.

Wesentliche Aspekte der vorliegenden Offenbarung werden nachfolgend anhand beispielhafter bevorzugter Ausgestaltungen zusammengefasst:

Gemäß einem ersten Aspekt betrifft die Erfindung einen elektromotorischen Möbelbeschlag zur Kopfteilverstellung mit einem Halteträger 20, einem ersten Schubelement 22, einem zweiten Schubelement 24, welches verschwenkbar gegenüber dem ersten Schubelement 22 ist, und einem dritten Schubelement 26, welches wiederum verschwenkbar zum ersten Schubelement 22 und längsverschiebbar zum zweiten Schubelement 24 ist, wobei durch die Längsverschiebung des ersten Schubelements 22 eine Schwenkbewegung des zweiten Schubelements 24 mit einer Relativbewegung zum ersten Schubelement 22 und einer daraus resultierenden Vorschubbewegung des dritten Schubelements 26 erzeugt wird.

Gemäß einer vorteilhaften Ausgestaltung dieses Aspekts bewirkt ein Schwenken des zweiten Schubelements 24 um eine Lagerung 68 über einen Hebelmechanismus 32, 34 eine Vorschubbewegung des dritten Schubelements 26.

Gemäß einer weiteren vorteilhaften Ausgestaltung des vorstehend genannten Aspekts ist ein mit dem ersten Möbelbeschlag über ein Befestigungsrohr 132 verbundener zweiter Möbelbeschlag ohne Motor zwangsgekoppelt miteinander verschiebbar.

Aspekte der Offenbarung betreffen einen elektromotorischen Möbelbeschlag 10, der einen Halteträger 20 umfasst, der beispielweise an einer Rückenlehne 104 eines Sitzmöbels 100 befestigt wird. Ein Schubelement 26 wird beispielweise an einer Kopfteilauflage 102 befestigt. Ein Elektromotor 88 ist mit dem Halteträger 20 verbunden. Ein Schubelement 22 ist mit einer Spindel 80 fest verbunden.

Das Schubelement 22 ist im Halteträger 20 durch Führungselemente 58 gehalten und verdrehgesichert längsverschiebbar geführt. Ein Schubelement 24 ist schwenkbar am Schubelement 22 gelagert. Zudem ist das Schubelement 24 über den Hebel 32 schwenkbar am Halteträger 20 montiert. Ein Schubelement 26 ist durch Führungselemente 64 gehalten und verdrehgesichert längsverschiebbar geführt. Das Schubelement 26 ist über einen Hebel 34 schwenkbar mit am Schubelement 22 montiert.

Ein Befestigungspunkt 94 ist über ein Befestigungsrohr 132 mit einem zweiten Möbelbeschlag 130, welcher keinen Elektromotor benötigt, fest verdrehgesichert verbunden, wodurch der Möbelbeschlag 130 zwangsgekoppelt ist.

Durch das Ausfahren des Schubelements 22 wird das Schubelement 24 um eine Lagerung 68 geschwenkt, da der Hebel 32 mit dem Halteträger 20 und dem Schubelement 24 drehbar gekoppelt ist. Aufgrund der Verschwenkung des Schubelements 24 erfolgt eine zwangsgekoppelte Vorschubbewegung von Schubelement 26 gegenüber dem Schubelement 24 da der Hebel 34 drehbar gelagert mit dem Schubelement 24 verbunden ist und das Schubelement 22 eine voreilende Vorschubbewegung auf das Schubelement 26 ausübt.

Lediglich durch Ein- und Ausfahren der Spindel 80 wird als die gekoppelte Verschiebbarkeit und Verschwenkbarkeit der Schubelemente 22, 24 und 26 erzeugt. Diese Konstruktion ist robust und zuverlässig, einfach und preiswert aufgebaut. Die geringen Abmaße lassen auch den Einsatz in filigranen Sitzmöbeln zu. Fig. 5 zeigt den Möbelbeschlag 10 in seiner Stellung aus Fig. 3 jedoch in einer Ansicht von vorne, worin die geringe Breite des Beschlages erkennbar ist. Der Elektromotor 88 ist hier in einer 90° Stellung relativ zum Möbelbeschlag 10 ausgeführt. Es versteh sich, dass auch andere Kombinationen der Antriebsart (z. B. Bowdenzug) oder der Befestigungsausrichtung verwendbar sind, ohne den Rahmen dieser vorliegenden Erfindung zu verlassen.

Aus der Abfolge in den Fig. 6, 7 und 8 ist zu erkennen, dass durch das Ausfahren des Möbelbeschlages 10 nicht nur die Kopfteilauflage 102 schwenkt, sondern gleichzeitig auch einen Spalt 106, 108 vergrößert. Auf diese Weise wird die Polsterung des Sitzmöbels 100 gestreckt gehalten und es kommt nicht zu einer unerwünschten Faltenbildung.

## Patentansprüche

1. Möbelbeschlag, der Folgendes aufweist:
- einen Halteträger (20),
- ein erstes Schubelement (22),
- ein zweites Schubelement (24), das gegenüber dem ersten Schubelement (22) verschwenkbar ist, und
- ein drittes Schubelement (26), das längsverschiebbar zum zweiten Schubelement (24) und gegenüber dem ersten Schubelement (22) verschwenkbar ist,
wobei eine Längsverschiebung des ersten Schubelements (22) eine Schwenkbewegung des zweiten Schubelements (24) relativ zum ersten Schubelement (22) und eine daraus resultierende Vorschubbewegung des dritten Schubelements (26) bewirkt,
wobei ein Schwenken des zweiten Schubelements (24) um eine Lagerung am ersten Schubelement (22) über einen Koppelmechanismus (30), insbesondere einen Hebelmechanismus, eine Vorschubbewegung des dritten Schubelements (26) bewirkt,
**dadurch gekennzeichnet,**
**dass** zumindest am Halteträger (20) oder am ersten Schubelement (22) eine Längsnut (56) als Führung für eine Längsverschiebung zwischen dem Halteträger (20) und dem ersten Schubelement (22) ausgebildet ist, und
**dass** zumindest am zweiten Schubelement (24) oder am dritten Schubelement (26) eine Längsnut (62) als Führung für eine Längsverschiebung zwischen dem zweiten Schubelement (24) und dem dritten Schubelement (26) ausgebildet ist.

2. Möbelbeschlag (10, 150) nach Anspruch 1, wobei der Halteträger (20) und das erste Schubelement (22) einer ersten Schubgelenkeinheit (12) zugeordnet sind, wobei das erste Schubelement (22) längsverschieblich am Halteträger (20) aufgenommen ist, und wobei vorzugsweise das zweite Schubelement (24) und das dritte Schubelement (26) einer zweiten Schubgelenkeinheit (14) zugeordnet sind, wobei das dritte Schubelement (26) längsverschieblich am zweiten Schubelement (24) aufgenommen ist.

3. Möbelbeschlag (10, 150) nach Anspruch 1 oder 2, wobei der Halteträger (20), das erste Schubelement (22), das zweite Schubelement (24) und das dritte Schubelement (26) Komponenten eines ebenen Koppelgetriebes bilden und insbesondere parallel zueinander ausgerichtet sind.

4. Möbelbeschlag (10, 150) nach Anspruch 3, wobei das erste Schubelement (22) und das dritte Schubelement (26) in einer gemeinsamen Ebene angeordnet sind, die zu einer Ebene versetzt ist, in der das zweite Schubelement (24) angeordnet ist.

5. Möbelbeschlag (10, 150) nach einem der vorhergehenden Ansprüche, wobei der Längsnut (56, 62) zwei Führungselemente (58, 64), insbesondere zwei voneinander beabstandete Führungsbolzen, zugeordnet sind, die in die Längsnut (56, 62) eingreifen und in dieser verschieblich aufgenommen sind.

6. Möbelbeschlag (10, 150) nach einem der vorhergehenden Ansprüche, wobei das zweite Schubelement (24) schwenkbar am ersten Schubelement (22) gelagert ist, und wobei das zweite Schubelement (24) über ein erstes Koppelstück (32), insbesondere über einen ersten Hebel, mit dem Halteträger (20) gekoppelt ist, und wobei das erste Koppelstück (32) vorzugsweise bei einer Längsverschiebung zwischen dem Halteträger (20) und dem ersten Schubelement (22) eine Schwenkbewegung des zweiten Schubelements (24) relativ zum ersten Schubelement (22) bewirkt.

7. Möbelbeschlag (10, 150) nach Anspruch 6, wobei das dritte Schubelement (26) über ein zweites Koppelstück (34), insbesondere über einen zweiten Hebel, mit dem ersten Schubelement (22) gekoppelt ist, und wobei das zweite Koppelstück (34) vorzugsweise bei einer Relativverschwenkung zwischen dem ersten Schubelement (22) und dem zweiten Schubelement (24) eine Längsverschiebung zwischen dem zweiten Schubelement (24) und dem dritten Schubelement (26) bewirkt.

8. Möbelbeschlag (10, 150) nach Anspruch 7, wobei das erste Koppelstück (32) und das zweite Koppelstück (34) an voneinander abgewandten Seiten des ersten Schubelements (22) angeordnet sind, und wobei das erste Schubelement (22), vorzugsweise auch das zweite Schubelement (24) und das dritte Schubelement (26), zwischen dem ersten Koppelstück (32) und dem zweiten Koppelstück (34) angeordnet sind.

9. Möbelbeschlag (10, 150) nach einem der vorhergehenden Ansprüche, ferner aufweisend ein viertes Schubelement (158) und ein fünftes Schubelement (160), wobei das vierte Schubelement (158) und das fünfte Schubelement (160) einer dritten Schubgelenkeinheit (154) zugeordnet sind, und wobei das fünfte Schubelement (160) längsverschieblich am vierten Schubelement (158) aufgenommen ist.

10. Möbelbeschlag (10, 150) nach Anspruch 9, wobei das vierte Schubelement (158) schwenkbar am dritten Schubelement (26) gelagert ist, wobei das vierte Schubelement (158) über ein drittes Koppelstück (166), insbesondere über einen dritten Hebel, mit dem zweiten Schubelement (24) gekoppelt ist, und wobei das fünfte Schubelement (160) über ein viertes Koppelstück (168), insbesondere über einen vierten Hebel, mit dem dritten Schubelement (26) gekoppelt ist.

11. Möbelbeschlag (10, 150) nach Anspruch 10, wobei das dritte Koppelstück (166) bei einer Längsverschiebung zwischen dem dritten Schubelement (26) und dem zweiten Schubelement (24) eine Schwenkbewegung des vierten Schubelements (158) relativ zum dritten Schubelement (26) bewirkt, und wobei das vierte Koppelstück (168) bei einer Relativverschwenkung zwischen dem dritten Schubelement (26) und dem vierten Schubelement (158) eine Längsverschiebung zwischen dem vierten Schubelement (158) und dem fünften Schubelement (160) bewirkt.

12. Möbelbeschlag (10, 150) nach einem der vorhergehenden Ansprüche, wobei zumindest einige der Schubelemente (22, 24, 26, 158, 160), vorzugsweise sämtliche Schubelemente (22, 24, 26, 158, 160), als im Wesentlichen flache Blechteile ausgestaltet sind, wobei insbesondere zumindest einige der Schubelemente (22, 24, 26, 158, 160) als ebene Stanzteile aus Blechmaterial ausgeführt sind.

13. Möbelbeschlag (10, 150) nach Anspruch 12, wobei der Halteträger (20) ein erstes Trägerteil (40) und ein zweites Trägerteil (42) aufweist, die aus Blechmaterial geformt und vorzugsweise im Wesentlichen spiegelsymmetrisch gestaltet sind, wobei das erste Trägerteil (40) und das zweite Trägerteil (42) zwischen sich einen Führungsspalt für das erste Schubelement (22) definieren, und wobei vorzugsweise zumindest das erste Trägerteil (40) oder das zweite Trägerteil (42) eine Abkantung (50, 52) aufweist, die als Befestigungslasche zur Befestigung an einem Möbelstück (100, 200) ausgebildet ist.

14. Möbelbeschlag (10, 150) nach einem der vorhergehenden Ansprüche, wobei das erste Schubelement (22) mit einer Gewindespindel (80) gekoppelt ist, die in einem Lagerstück (84) geführt ist, das am Halteträger (20) aufgenommen ist.

15. Anordnung mit einem Möbelbeschlag (10, 150) nach einem der vorhergehenden Ansprüche, wobei der Möbelbeschlag (10, 150) als erster Möbelbeschlag (10, 150) ausgeführt und mit einem zweiten Möbelbeschlag (130) derart zwangsgekoppelt verbunden ist, dass der zweite Möbelbeschlag (130) gemeinsam mit dem ersten Möbelbeschlag (10, 150) bewegt wird, wobei der erste Möbelbeschlag (10, 150) und der zweite Möbelbeschlag (130) vorzugsweise über ein Verbindungsstück (132), insbesondere ein Befestigungsrohr, miteinander gekoppelt sind, das insbesondere in Aussparungen (94) der dritten Schubelemente (26) des ersten Möbelbeschlags (10, 150) und des zweiten Möbelbeschlags (130) eingreift.

## Claims

1. Furniture fitting, comprising:
- a support bracket (20),
- a first push element (22),
- a second push element (24) which is pivotable with respect to the first push element (22), and
- a third push element (26) which is longitudinally displaceable with respect to the second push element (24) and pivotable with respect to the first push element (22), wherein a longitudinal displacement of the first push element (22) effects a pivoting movement of the second push element (24) relative to the first push element (22) and a feed movement of the third push element (26) resulting therefrom,
wherein a pivoting of the second push element (24) about a bearing at the first push element (22) effects a feed movement of the third push element (26) via a coupling mechanism (30), particularly a lever mechanism,
**characterized in that**
at least at the support bracket (20) or at the first push element (22) an elongated slot (56) is formed as a guide for a longitudinal displacement between the support bracket (20) and the first push element (22), and
at least at the second push element (24) or at the third push element (26) an elongated slot (62) is formed as a guide for a longitudinal displacement between the second push element (24) and the third push element (26).

2. Furniture fitting (10, 150) according to claim 1, wherein the support bracket (20) and the first push element (22) are assigned to a first slide joint unit (12), wherein the first push element (22) is arranged at the support bracket (20) in a longitudinally displaceable fashion, and wherein preferably the second push element (24) and the third push element (26) are assigned to a second slide joint unit (14), wherein the third push element (26) is arranged at the second push element (24) in a longitudinally displaceable fashion.

3. Furniture fitting (10, 150) according to claim 1 or 2, wherein the support bracket (20), the first push element (22), the second push element (24) and the third push element (26) form components of a planar coupling mechanism and are particularly oriented in a fashion parallel to one another.

4. Furniture fitting (10, 150) according to claim 3, wherein the first push element (22) and the third push element (26) are arranged in a common plane which is offset from a plane in which the second push element (24) is arranged.

5. Furniture fitting (10, 150) according to any of the preceding claims, wherein two guide elements (58, 64), particularly two guide bolts that are spaced from one another, are assigned to the elongated slot (56, 62), wherein the two guide elements (58, 64) engage the elongated slot (56, 62) and are arranged therein in a slidable fashion.

6. Furniture fitting (10, 150) according to any of the preceding claims, wherein the second push element (24) is pivotably mounted at the first push element (22), and wherein the second push element (24) is coupled with the support bracket (20) via a first linking piece (32), particularly via a first lever, and wherein preferably the first linking piece (32) effects a pivoting movement of the second push element (24) with respect to the first push element (22) when a longitudinal displacement between the support bracket (20) and the first push element (22) takes place.

7. Furniture fitting (10, 150) according to claim 6, wherein the third push element (26) is coupled with the first push element (22) via a second linking piece (34), particularly via a second lever, and wherein preferably the second linking piece (34) effects a longitudinal displacement between the second push element (24) and the third push element (26) when a relative pivoting movement between the first push element (22) and the second push element (24) takes place.

8. Furniture fitting (10, 150) according to claim 7, wherein the first linking piece (32) and the second linking piece (34) are arranged at sides of the first push element (22) that are facing away from one another, and wherein the first push element (22), preferably also the second push element (24) and the third push element (26), are arranged between the first linking piece (32) and the second linking piece (34).

9. Furniture fitting (10, 150) according to any of the preceding claims, further comprising a fourth push element (158) and a fifth push element (160), wherein the fourth push element (158) and the fifth push element (160) are assigned to a third slide joint unit (154), and wherein the fifth push element (160) is arranged at the fourth push element (158) in a longitudinally displaceable fashion.

10. Furniture fitting (10, 150) according to claim 9, wherein the fourth push element (158) is pivotably mounted at the third push element (26), wherein the fourth push element (158) is coupled with the second push element (24) via a third linking piece (166), particularly via a third lever, and wherein the fifth push element (160) is coupled with the third push element (26) via a fourth linking piece (168), particularly via a fourth lever.

11. Furniture fitting (10, 150) according to claim 10, wherein the third linking piece (166) effects a pivoting movement of the fourth push element (158) with respect to the third push element (26) when a longitudinal displacement between the third push element (26) and the second push element (24) takes place, and wherein the fourth linking piece (168) effects a longitudinal displacement between the fourth push element (158) and the fifth push element (160) when a relative pivoting between the third push element (26) and the fourth push element (158) takes place.

12. Furniture fitting (10, 150) according to any of the preceding claims, wherein at least some of the push elements (22, 24, 26, 158, 160), preferably all push elements (22, 24, 26, 158, 160), are arranged as basically flat sheet metal material parts, in particular wherein at least some of the push elements (22, 24, 26, 158, 160) are arranged as planar punching parts made from sheet metal material.

13. Furniture fitting (10, 150) according to claim 12, wherein the support bracket (20) comprises a first support piece (40) and a second support piece (42) which are formed from sheet metal material and which are preferably basically formed in a mirror-symmetric fashion, wherein the first support piece (40) and the second support piece (42) define therebetween a guide gap for the first push element (22), and wherein preferably at least the first support piece (40) or the second support piece (42) comprises a bending (50, 52) which is formed as a mounting lug for mounting at a piece of furniture (100, 200).

14. Furniture fitting (10, 150) according to any of the preceding claims, wherein the first push element (22) is coupled with a threaded spindle (80) which is guided in a bearing piece (84) that is arranged at the support bracket (20).

15. Arrangement comprising a furniture fitting (10, 150) according to any of the preceding claims, wherein the furniture fitting (10, 150) is configured as a first furniture fitting (10, 150) and associated with a second furniture fitting (130) in a forced coupling fashion in such a way that the second furniture fitting (130) is moved together with the first furniture fitting (10, 150), wherein preferably the first furniture fitting (10, 150) and the second furniture fitting (130) are coupled to one another via a linking piece (132), particularly an attachment tube, which particularly engages recesses (94) at the third push elements (26) of the first furniture fitting (10, 150) and the second furniture fitting (130).

## Revendications

1. Ferrure de meuble, présentant :
- un support de fixation (20),
- un premier élément de poussée (22),
- un deuxième élément de poussée (24) qui peut pivoter par rapport au premier élément de poussée (22), et
- un troisième élément de poussée (26) qui peut être déplacé longitudinalement par rapport au deuxième élément de poussée (24) et qui peut pivoter par rapport au premier élément de poussée (22),
un déplacement longitudinal du premier élément de poussée (22) provoquant un mouvement de pivotement du deuxième élément de poussée (24) par rapport au premier élément de poussée (22) et un déplacement de poussée en résultant du troisième élément de poussée (26),
un pivotement du deuxième élément de poussée (24) autour d'un support sur palier au niveau du premier élément de poussée (22) par le biais d'un mécanisme d'accouplement (30), en particulier d'un mécanisme de levier, provoquant un mouvement de poussée du troisième élément de poussée (26),
**caractérisée**
**en ce qu'**au moins au niveau du support de fixation (20) ou au niveau du premier élément de poussée (22) est réalisée une rainure longitudinale (56) en tant que guide pour un déplacement longitudinal entre le support de fixation (20) et le premier élément de poussée (22), et
**en ce qu'**au moins au niveau du deuxième élément de poussée (24) ou au niveau du troisième élément de poussée (26) est réalisée une rainure longitudinale (62) en tant que guide pour un déplacement longitudinal entre le deuxième élément de poussée (24) et le troisième élément de poussée (26).

2. Ferrure de meuble (10, 150) selon la revendication 1, dans laquelle le support de fixation (20) et le premier élément de poussée (22) sont associés à une première unité d'articulation de poussée (12), le premier élément de poussée (22) étant reçu de manière déplaçable longitudinalement sur le support de fixation (20), et de préférence le deuxième élément de poussée (24) et le troisième élément de poussée (26) étant associés à une deuxième unité d'articulation de poussée (14), le troisième élément de poussée (26) étant reçu de manière déplaçable longitudinalement sur le deuxième élément de poussée (24).

3. Ferrure de meuble (10, 150) selon la revendication 1 ou 2, dans laquelle le support de fixation (20), le premier élément de poussée (22), le deuxième élément de poussée (24) et le troisième élément de poussée (26) forment des composants d'un mécanisme d'accouplement plan et sont notamment orientés parallèlement les uns aux autres.

4. Ferrure de meuble (10, 150) selon la revendication 3, dans laquelle le premier élément de poussée (22) et le troisième élément de poussée (26) sont disposés dans un plan commun qui est décalé par rapport à un plan dans lequel est disposé le deuxième élément de poussée (24).

5. Ferrure de meuble (10, 150) selon l'une quelconque des revendications précédentes, dans laquelle à la rainure longitudinale (56, 62) sont associés deux éléments de guidage (58, 64), en particulier deux boulons de guidage espacés l'un de l'autre, qui viennent en prise dans la rainure longitudinale (56, 62) et qui sont reçus de manière déplaçable dans celle-ci.

6. Ferrure de meuble (10, 150) selon l'une quelconque des revendications précédentes, dans laquelle le deuxième élément de poussée (24) est supporté de manière pivotante sur le premier élément de poussée (22), et dans laquelle le deuxième élément de poussée (24) est accouplé au support de fixation (20) par le biais d'une première pièce d'accouplement (32), en particulier par le biais d'un premier levier, et dans laquelle la première pièce d'accouplement (32), de préférence dans le cas d'un déplacement longitudinal entre le support de fixation (20) et le premier élément de poussée (22), provoque un mouvement de pivotement du deuxième élément de poussée (24) par rapport au premier élément de poussée (22).

7. Ferrure de meuble (10, 150) selon la revendication 6, dans laquelle le troisième élément de poussée (26) est accouplé par le biais d'une deuxième pièce d'accouplement (34), en particulier par le biais d'un deuxième levier, au premier élément de poussée (22), et dans laquelle la deuxième pièce d'accouplement (34), de préférence dans le cas d'un pivotement relatif entre le premier élément de poussée (22) et le deuxième élément de poussée (24), provoque un déplacement longitudinal entre le deuxième élément de poussée (24) et le troisième élément de poussée (26).

8. Ferrure de meuble (10, 150) selon la revendication 7, dans laquelle la première pièce d'accouplement (32) et la deuxième pièce d'accouplement (34) sont disposées sur des côtés opposés l'un à l'autre du premier élément de poussée (22), et dans laquelle le premier élément de poussée (22), de préférence également le deuxième élément de poussée (24) et le troisième élément de poussée (26), sont disposés entre la première pièce d'accouplement (32) et la deuxième pièce d'accouplement (34).

9. Ferrure de meuble (10, 150) selon l'une quelconque des revendications précédentes, comprenant en outre un quatrième élément de poussée (158) et un cinquième élément de poussée (160), le quatrième élément de poussée (158) et le cinquième élément de poussée (160) étant associés à une troisième unité d'articulation de poussée (154), et le cinquième élément de poussée (160) étant reçu de manière déplaçable longitudinalement sur le quatrième élément de poussée (158).

10. Ferrure de meuble (10, 150) selon la revendication 9, dans laquelle le quatrième élément de poussée (158) est supporté de manière pivotante sur le troisième élément de poussée (26), le quatrième élément de poussée (158) étant accouplé par le biais d'une troisième pièce d'accouplement (166), en particulier par le biais d'un troisième levier, au deuxième élément de poussée (24), et dans laquelle le cinquième élément de poussée (160) est accouplé par le biais d'une quatrième pièce d'accouplement (168), en particulier par le biais d'un quatrième levier, au troisième élément de poussée (26).

11. Ferrure de meuble (10, 150) selon la revendication 10, dans laquelle la troisième pièce d'accouplement (166), dans le cas d'un déplacement longitudinal entre le troisième élément de poussée (26) et le deuxième élément de poussée (24), provoque un mouvement de pivotement du quatrième élément de poussée (158) par rapport au troisième élément de poussée (26), et dans laquelle la quatrième pièce d'accouplement (168), dans le cas d'un pivotement relatif entre le troisième élément de poussée (26) et le quatrième élément de poussée (158), provoque un déplacement longitudinal entre le quatrième élément de poussée (158) et le cinquième élément de poussée (160).

12. Ferrure de meuble (10, 150) selon l'une quelconque des revendications précédentes, dans laquelle au moins certains des éléments de poussée (22, 24, 26, 158, 160), de préférence tous les éléments de poussée (22, 24, 26, 158, 160) sont réalisés sous forme de pièces en tôle sensiblement plates, au moins certains des éléments de poussée (22, 24, 26, 158, 160) étant notamment réalisés sous forme de pièces estampées plates en matériau en tôle.

13. Ferrure de meuble (10, 150) selon la revendication 12, dans laquelle le support de fixation (20) présente une première partie de support (40) et une deuxième partie de support (42) qui sont formées en matériau en tôle et qui sont configurées de préférence essentiellement avec une symétrie spéculaire, la première partie de support (40) et la deuxième partie de support (42) définissant entre elles une fente de guidage pour le premier élément de poussée (22), et de préférence au moins la première partie de support (40) ou la deuxième partie de support (42) présentant une partie coudée (50, 52) qui est réalisée sous forme de patte de fixation pour la fixation à une pièce de meuble (100, 200).

14. Ferrure de meuble (10, 150) selon l'une quelconque des revendications précédentes, dans laquelle le premier élément de poussée (22) est accouplé à une broche filetée (80) qui est guidée dans une pièce de palier (84) qui est reçue sur le support de fixation (20).

15. Agencement comprenant une ferrure de meuble (10, 150) selon l'une quelconque des revendications précédentes, dans lequel la ferrure de meuble (10, 150) est réalisée sous forme de première ferrure de meuble (10, 150) et est connectée de manière accouplée par force à une deuxième ferrure de meuble (130), de telle sorte que la deuxième ferrure de meuble (130) soit déplacée conjointement avec la première ferrure de meuble (10, 150), la première ferrure de meuble (10, 150) et la deuxième ferrure de meuble (130) étant accouplées l'une à l'autre de préférence par le biais d'une pièce de connexion (132), en particulier un tube de fixation qui vient en prise notamment dans des évidements (94) des troisièmes éléments de poussée (26) de la première ferrure de meuble (10, 150) et de la deuxième ferrure de meuble (130).
